# EUROPEAN PATENT APPLICATION

(11) **EP 1 975 774 A2**
(43) Date of publication of application: **01.10.2008**
(21) Application number: 08153376.2
(22) Date of filing: 27.03.2008
(51) Int. Cl.: G06F 3/12

(54) **Print system, print control apparatus, and print control method**

(30) Priority: 28.03.2007 JP 2007085889
(71) Applicant: Canon Kabushiki Kaisha, Tokyo 146-8501 (JP)
(72) Inventor: Oshima, Keita c/o CANON KABUSHIKI KAISHA, Tokyo Tokyo 146-8501 (JP)
(74) Representative: TBK-Patent

(57) **Abstract**

This invention improves the operability in a process of compositing print jobs in a business-oriented printer. A client PC (1) acquires the print job attribute of an existing print job compositable with a print job of interest that the client PC (1) is going to submit to a server PC (2). The client PC (1) displays the preview of the print job on the basis of the acquired print job attribute. The user decides, on the preview image, the layout of the print job of interest after composition and submits the identifier of the composition target print job and the print job of interest to the server PC (2). The server PC (2) composites the two print jobs and updates print settings for cutting.

## Description

### BACKGROUND OF THE INVENTION

### Field of the Invention

The present invention relates to a print system, print control apparatus, and print control method, which increase the efficiency of a print process by linking a print job in a process wait state with another print job.

### Description of the Related Art

A technique is conventionally used, which links a plurality of print jobs with each other and creates a printed product based on the plurality of linked print jobs. Such a method of linking a plurality of print jobs is called gang-up. In printing using gang-up, print ranges (e.g., A4-size areas) on sheets to be printed by individual print jobs to be composited are laid out on a sheet to be printed by the composited print job. Printed products corresponding to the individual print jobs can be output by cutting a printed product obtained by executing the composited print job. The output printed products corresponding to the individual print jobs undergo a post-process and the like as needed. This increases the efficiency of output processing of a plurality of print jobs and saves paper and print resources. Print job linking is mainly used in the field of commercial printing such as offset printing.

For business-oriented printers for processing a print job obtained by linking a plurality of print jobs, Japanese Patent Laid-Open No. 9-134261 discloses a technique that aims at simplifying the procedure of linking print jobs in advance. For example, an image forming apparatus described in Japanese Patent Laid-Open No. 9-134261 employs a technique of compositing a plurality of print jobs into one print job by designating automatic composition of print jobs of a single user or designating print jobs to be composited.

The technique of the above-described print job linking in a business-oriented printer is different from gang-up. More specifically, in print job linking in a business-oriented printer, a plurality of print jobs are linked in series. Print settings such as a layout defined in the print jobs are maintained even after linking. To discriminate between the two techniques, ganging up print jobs will be referred to as print job composition. A composited print job will be referred to as a composite print job, assembled print job, or ganged print job. On the other hand, linking print jobs by a business-oriented printer will be referred to as print job combination. A linked print job will be referred to as a combined print job.

It is preferable to increase the efficiency of a print job process by gang-up in a business-oriented printer, too. Even in the commercial printing field, the necessity of automating print job composition, like the business-oriented printers, is growing along with the progress of digitization of printing presses.

However, it is difficult to gang up print jobs in the same manner as print job combination in a business-oriented printer. This is because in ganging up print jobs, the paper size and layout may change from those of original print job settings due to composition. For example, assume that a print job in a process wait state is to be ganged up with another designated print job. It is not always possible to composite a print job. It is necessary to create a printed product by executing the composited print job and, by cutting the printed product, obtain printed products intended by the original print jobs. For example, if the print range of one print job that is a component to be composited (to be referred to as a component print job hereinafter) extends off the layout area of a sheet to be printed by the composite print job, the print job should not be composited.

To obtain a desired output by compositing print jobs, print jobs need to be combined appropriately. However, a user who should designate at least one of component print jobs can hardly determine which print jobs can be combined appropriately. This is because the user must consider the print range of each print job to be composited and association with post-processes in order to determine whether gang-up is allowed or not.

### SUMMARY OF THE INVENTION

The present invention has been made in consideration of the above-described prior art, and provides a print system, print control apparatus, and print control method, which improve the operability in a process of compositing print jobs manually designated by a user. Further, the present invention provides a print system, print control apparatus, and print control method, which can increase the efficiency of printed product layout by a composite print job and consequently reduce the cost of a print process.

The present invention in its first aspect provides a print control apparatus as specified in claims 1 to 10.

The present invention in its another aspect provides a print system as specified in claim 11.

According to the present invention, it is possible to improve the operability in a process of compositing print jobs manually designated by a user, increase the efficiency of printed product layout by a composite print job, and consequently reduce the cost of a print process.

Further features of the present invention will become apparent from the following description of exemplary embodiments with reference to the attached drawings.

### BRIEF DESCRIPTION OF THE DRAWINGS

Fig. 1 is a block diagram showing an example of the device arrangement of an entire system;

Fig. 2 is a block diagram showing an example of a server PC;

Fig. 3 is a block diagram showing an example of a client PC;

Fig. 4 is a block diagram showing an example of the functional arrangement of the entire system;

Fig. 5 is a view showing an example of image layout by print job composition;

Fig. 6 is a view showing another example of image layout by print job composition;

Fig. 7 is a view showing still another example of image layout by print job composition;

Fig. 8 is a view showing still another example of image layout by print job composition;

Fig. 9 is a view showing still another example of image layout by print job composition;

Fig. 10 is a view showing still another example of image layout by print job composition;

Fig. 11 is a view showing still another example of image layout by print job composition;

Fig. 12 is a view showing an example of addition of a cutting process;

Fig. 13 is a view showing an example of a user interface screen;

Fig. 14 is a view showing anther example of the user interface screen;

Fig. 15 is a sequence chart showing an example of data exchange;

Fig. 16 is a flowchart illustrating an example of print job submission;

Fig. 17 is a view showing an example of data of a print job condition;

Fig. 18 is a view showing an example of a JDF;

Fig. 19 is a view showing an example of area segmentation;

Fig. 20 is a view showing another example of the JDF;

Fig. 21 is a view showing another example of area segmentation;

Fig. 22 is a view showing still another example of area segmentation;

Fig. 23 is a view showing another example of the JDF;

Figs. 24A and 24B is a flowchart illustrating an example of a procedure of deciding cut settings in normal print job submission;

Figs. 25A and 25B is a flowchart illustrating an example of a procedure of determining whether print job composition is possible;

Fig. 26 is a flowchart illustrating an example of a procedure of compositing print jobs;

Fig. 27 is a block diagram of the second embodiment;

Fig. 28 is a sequence chart of the third embodiment;

Fig. 29 is a view showing area segmentation and color chart positions according to the fourth embodiment;

Fig. 30 is a view showing an example of a JDF according to the fourth embodiment;

Fig. 31 is a view showing another example of a JDF according to the fourth embodiment;

Fig. 32 is a view showing an example of gang-up considering folding; and

Fig. 33 is a flowchart illustrating a process of collecting print job identifiers which allow print job composition.

### DESCRIPTION OF THE EMBODIMENTS

<First Embodiment> An embodiment of the present invention will now be described in detail with reference to the accompanying drawings.

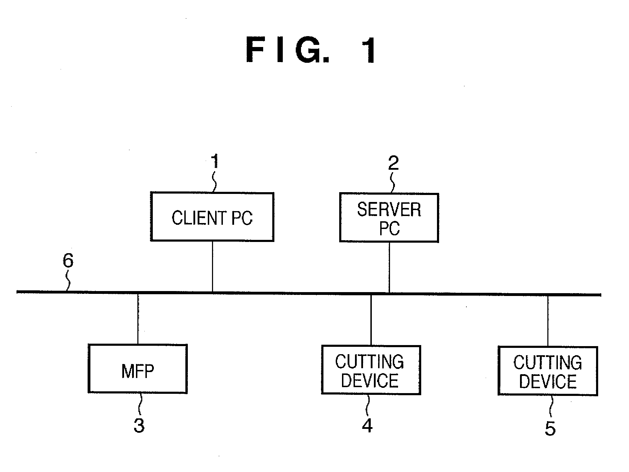

[Device Arrangement of Entire System] Fig. 1 is a block diagram showing an example of the device arrangement of an entire system. Referring to Fig. 1, a client PC 1 submits a print job to the print system. A server PC 2 receives the print job and functions as a print control apparatus. A multifunctional printer (MFP) 3 has a cutting device as an inline finisher. Post-processing devices 4 and 5 are cutting devices connected separately from the MFP. The devices 1 to 5 are connected to each other via a network 6.

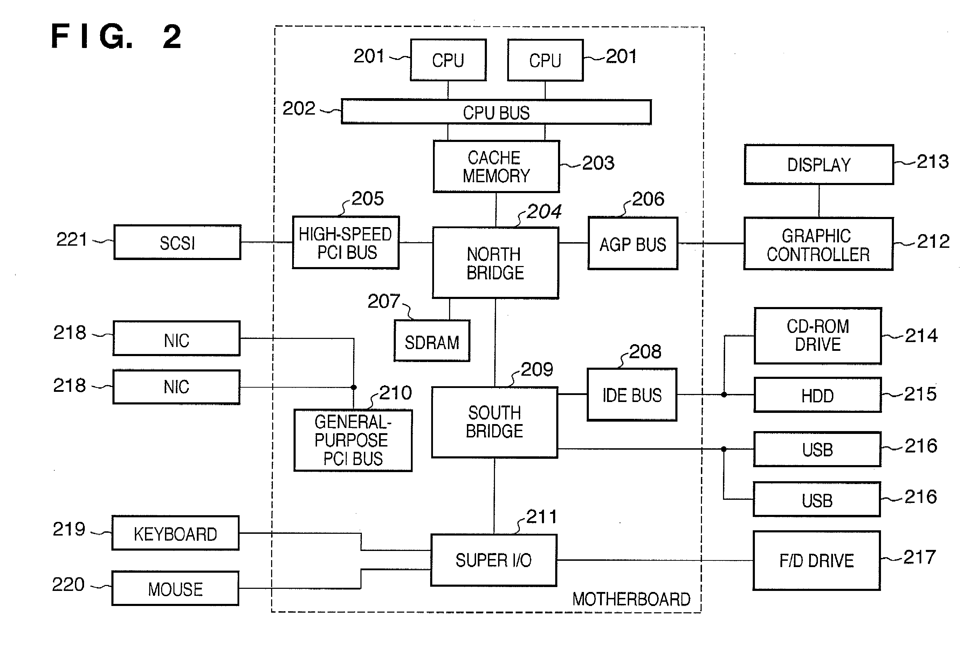

[Arrangement of Server PC] The server PC 2 will be described next with reference to Fig. 2. A generally known hardware configuration of the server PC 2 has various connection methods and various buses and interfaces. A hardware configuration to be described here is merely an example.

The dotted line indicates a board called a motherboard which has functions to be described below. Two CPUs 201 control the whole software of the server PC 2 and are connected to a cache memory 203 via a CPU bus 202. LSI (Large Scale Integration) chips called a north bridge 204 and a south bridge control various buses on the motherboard. A memory such as an SDRAM 207 is used to, e.g., exchange data between the north bridge 204 and the south bridge 209 or temporarily save data in the server PC 2.

The north bridge 204 has a high-speed PCI (Peripheral Component Interconnect) bus 205. PCI buses complying with 32-bit/66-MHz specifications are widely known. A PCI Express bus or PCI-X bus with a higher speed is also usable. The north bridge 204 can access an SCSI external device (e.g., hard disk drive for storing a large quantity of data) via a SCSI controller & SCSI interface 221. A graphic controller 212 for displaying an image on a display 213 is also connected to an AGP bus 206 of the north bridge 204.

The south bridge 209 is connected to a general-purpose PCI bus 210 (32-bit/33-MHz). NICs (Network Interface Cards) 218 such as Ethernet® are connected to the general-purpose PCI bus 210. The two NICs connected in Fig. 2 assume existence of two network systems. If only one network exists, one NIC suffices. However, when a high-speed NIC such as gigabit Ethernet® is used, the high-speed PCI bus 205 on the north bridge side is sometimes used to ensure the performance. The south bridge 209 also has an IDE (Integrated Disk Electronics) bus 208. A hard disk drive (HDD) 215, CD-ROM (or CD-R, CD-R/W) drive 214, DVD (or DVD-R, DVD-R/W, DVD-RAM) drive, and the like are connected to the IDE bus 208. These drives are used to store various kinds of data including the control software of the server PC 2, read out data at the time of installation in the server PC 2, or save (archive) a large quantity of data. USB external devices represented by a USB memory are connected to USB ports 216. The CPUs 201 are connected to a keyboard 219, mouse 220, and flexible disk drive (F/D drive) 217 via a super I/O 211 to input or output data.

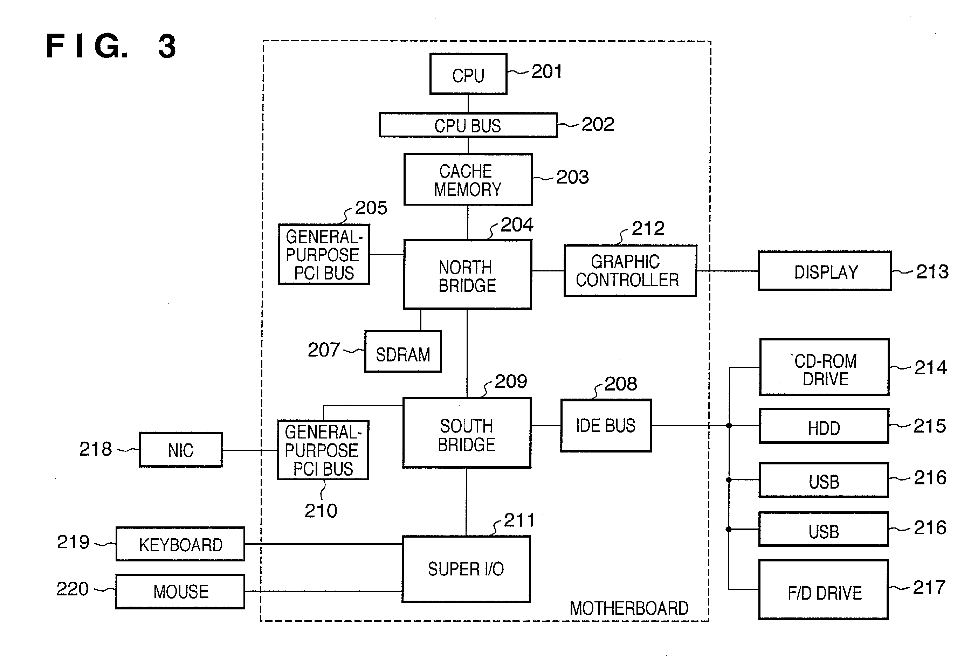

[Arrangement of Client PC] The client PC 1 will be described next with reference to Fig. 3. A generally known hardware configuration of the client PC 1 also has various connection methods and various buses and interfaces. A hardware configuration to be described here is merely an example. The same reference numerals as in Fig. 2 denote the same constituent elements in Fig. 3.

The dotted line indicates a motherboard. A CPU 201 controls the whole software of the client PC 1 while communicating with a north bridge 204 and a south bridge 209 via the cache memory. A memory (SDRAM) 207 is used to exchange data between the north bridge 204 and the south bridge 209 or temporarily save data in the client PC 1.

The north bridge 204 has a general-purpose PCI (32-bit/33-MHz) bus 205 connectable to an optional (retrofitted) SCSI external device. The north bridge 204 is also connected to a graphic controller 212 for displaying an image on a display 213.

The south bridge 209 has another general-purpose PCI bus 210 connectable to a network via an NIC 218. The south bridge 209 also has an IDE bus 208. A hard disk drive (HDD) 215, CD-ROM (or CD-R, CD-R/W) drive 214, and the like are connected to the IDE bus 208. These drives are used to store various kinds of data including the control software of the client PC 1, read out data at the time of installation in the client PC, or save (archive) a large quantity of data. USB external devices represented by a USB memory are connected to USB ports 216. The CPU 201 is connected to a keyboard 219, mouse 220, and flexible disk drive (F/D drive) 217 via a super I/O 211 to input or output data.

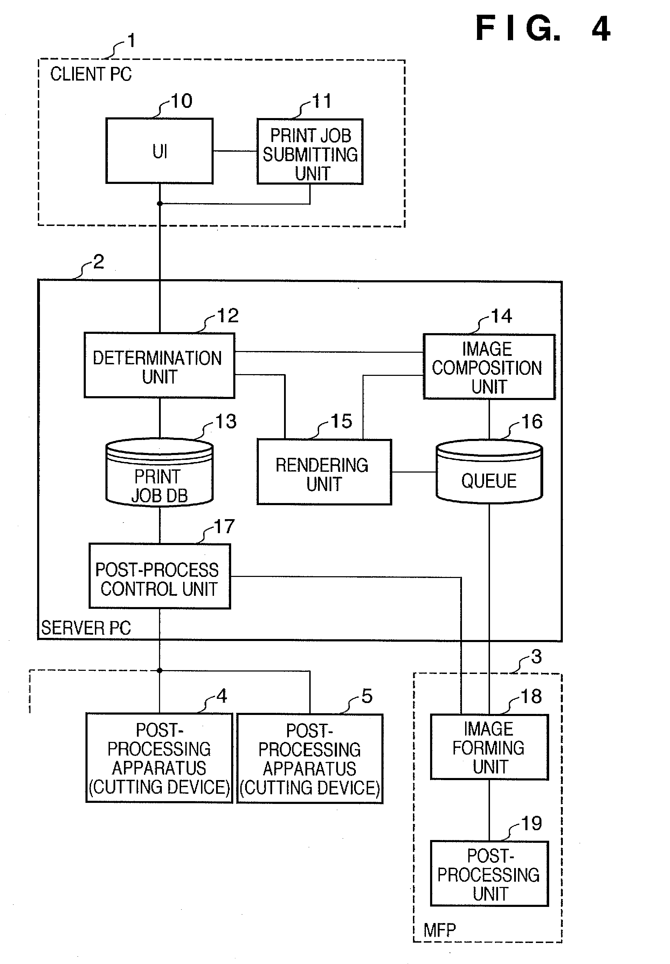

[Functional Arrangement of Entire System] Fig. 4 is a block diagram showing an example of the functional arrangement of the entire system. The same reference numerals as in Fig. 1 denote the same blocks in Fig. 4. The blocks of the client PC 1 and server PC 2 in Fig. 4 are functional means implemented by causing the CPU 201 to execute a program and cooperate with hardware resources such as a memory and input and output devices.

The client PC 1 has a user interface unit (UI) 10 and a print job submitting unit 11. A user submits a print job to the MFP 3 via the UI unit 10. To submit a print job, for example, the user designates, via the UI unit 10, the MFP 3 as a printing apparatus (printer) to be used and instructs to print data, which is created by an application program or the like, using the print function of the program. The print job submitting unit 11 is implemented by a function of, e.g., an applicant program or an operating system which generates a print job and sends it to the server PC 2. The function of the operating system is implemented by, e.g., a printer driver which converts application data into a format processable by a printer such as an MFP. The function is also implemented by, e.g., a spooler which spools data converted by a printer driver, or a program called a language monitor which sends data output from a spooler to the server PC 2.

The server PC 2 has a determination unit 12. The determination unit 12 controls whether to send a normal print job to the MFP 3 (this will be referred to as submitting a print job), or composite a plurality of print jobs by gang-up and submit the composite print job. To gang up print jobs, the determination unit 12 selects print jobs as a gang-up target on the basis of given conditions. Of print jobs to be composited, a print job issued from the client PC 1 will be referred to as a target print job (or first print job), and a print job queued in the server PC 2 will be referred to as an existing print job (or second print job). Note that gang-up is equivalent to a process of compositing a plurality of print jobs.

The determination unit 12 sends, to a rendering unit 15, a target print job received from the print job submitting unit 11. The rendering unit 15 renders the received print job. Alternatively, the determination unit 12 sends, to an image composition unit 14, an existing print job already stored in a queue 16 and the target print job received from the print job submitting unit 11. The image composition unit 14 composites (gangs) the plurality of print jobs. The determination unit 12 also executes input/output to/from a print job database 13 to determine a print job which can be composited with a print job of interest. In this embodiment, the print setting information (e.g., attribute information of a print job, including various print settings such as a size) for a print job process is stored in the print job database 13, and rendered image data is stored in the queue 16. The print setting information and image data are associated with each other by, e.g., a print job identifier. However, they may be stored together in one of the storages. The attribute information of a print job includes print settings to decide a paper size, paper type, number of pages, number of copies, image processing profile name, and cutting method. These print settings should be saved to execute printing even after rendering. The print settings to be saved to execute printing also include a designation of double-side printing or single-side printing. However, this setting is not used for print job composition in this embodiment. Print settings which are necessary for rendering but unnecessary after it include layout settings. In this embodiment, information about printing such as print job attribute information will be referred to as print setting information.

That is, the queue 16 and print job database 13 function as holders for holding a print job waiting for a print process and its print setting information in association with each other.

The MFP 3 has an image forming unit 18 and a post-processing unit 19 serving as an inline cutting finisher. The image forming unit 18 sequentially prints print jobs from the queue 16. The inline finisher has a paper path (also called a paper conveyance path) physically connected to the MFP. The inline finisher is also electrically connected to the MFP to execute an operation instruction and status confirmation.

A post-process control unit 17 controls post-processes after printing of each print job in accordance with the contents of a JDF stored in the print job database 13. To do this, the post-process control unit 17 controls the post-processing devices 4 and 5 serving as cutting devices connected via a network, and the post-processing unit 19 in the MFP 3.

The print job database 13 stores JDFs (print job definition files) each of which describes print setting information about a process of an existing print job waiting in the queue 16 for a process. Each JDF describes the print job attribute information of an existing print job waiting for a process and the contents of post-processes after printing. The print job attribute information includes, e.g., a paper size, layout, and designation of double-side printing/single-side printing. Each JDF describes, e.g., the ways to fold, cut, and bind paper sheets as the contents of post-processes after printing. In compositing print jobs, the rendering unit 15 and image composition unit 14 composite image data on the basis of information obtained by referring to the JDF of an existing print job extracted from the queue 16, and additionally, the JDF of the newly created composite print job is generated. The JDF is also called a job ticket.

[Types of Cutting Devices] The cutting method of each cutting device will be described next. Conditions such as the number of cuttable paper sheets and a size after cutting change depending on the type of a cutting device.

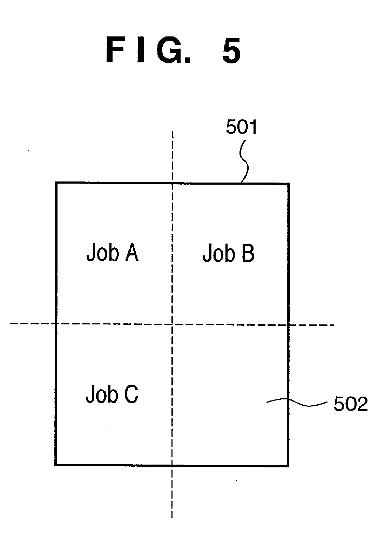

Fig. 5 is a view showing an example of a printed product 501 using the cutting device 4 in Fig. 1. The dotted lines indicate cut lines. The cutting device 4 can cut a paper sheet into four pieces by cutting it once vertically and once horizontally.

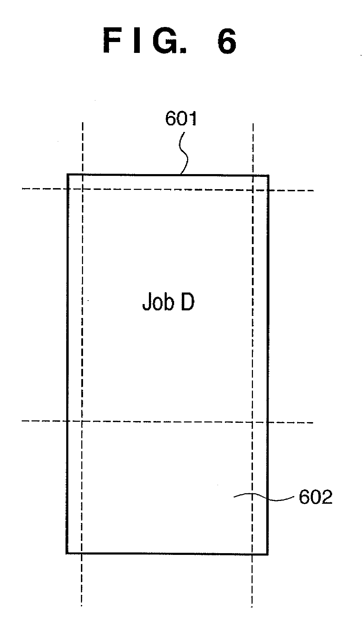

Fig. 6 is a view showing an example of a printed product 601 using the inline finisher (post-processing unit 19) provided in the MFP 3 in Fig. 1. The dotted lines indicate cut lines. The inline finisher can cut the left and right sides of a paper sheet at a predetermined width (defined by the vertical dotted lines) and also cut the paper sheet at arbitrary positions (indicated by the horizontal dotted lines) in the vertical direction, i.e., in the paper conveyance direction. That is, the inline finisher can cut a paper sheet into pieces having a predetermined width and arbitrary lengths.

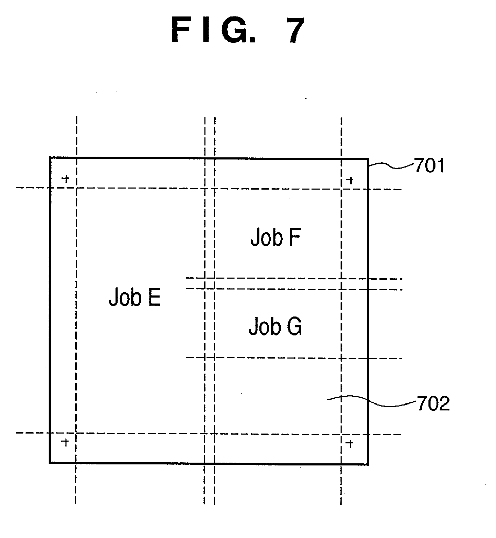

Fig. 7 is a view showing an example of a printed product 701 using the cutting device 5 in Fig. 1. The dotted lines indicate cut lines. The cutting device 5 can cut a paper sheet an arbitrary number of times at arbitrary positions in both the vertical and horizontal directions in accordance with cut marks (registry guides).

[Conditions for Print Job Composition] Figs. 5 to 7 illustrate examples in which the print ranges of print jobs (to be referred to as element print jobs) composited into one composite print job are divided by cutting. In the examples shown in Figs. 5 to 7, the print ranges of a plurality of element print jobs are laid out without overlap such that they can be divided in a minimum number of steps. Conditions to allow print job composition will be described next.

In the example in Fig. 5, three element print jobs JobA, JobB, and JobC are composited into one composite print job. More specifically, the printed product shown in Fig. 5 based on one composite print job is obtained by laying out the three element print jobs JobA, JobB, and JobC on one sheet without overlap of print ranges. Fig. 5 illustrates one sheet as an example. Normally, a plurality of sheets are printed by one composite print job. In printing a plurality of sheets, each sheet is printed in accordance with the layout shown in Fig. 5. This also applies to the examples in Figs. 6 and 7. Hence, the print range of each element print job is common to all sheets of a printed product based on a composite print job formed by gang-up. For this reason, when the plurality of stacked sheets of the printed product are cut, the respective blocks (blocks of stacked sheets) after cutting can directly be handled as the output products of the element print jobs. In Fig. 5, the lower right area is an unused area which is not assigned to any print job.

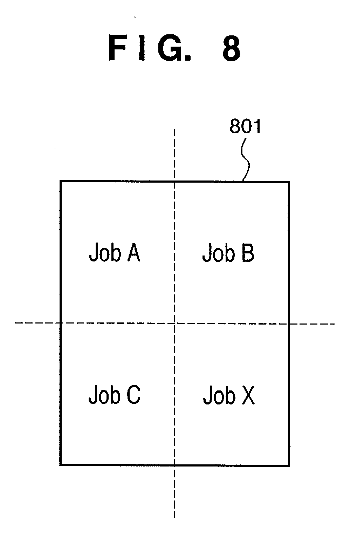

Fig. 8 is a view showing an example of a printed product 801 obtained by compositing still another element print job JobX with the composite print job that outputs the result shown in Fig. 5. As shown in Fig. 8, when the cutting device 4 should quarter the paper sheet, the print range of the JobX to be composited needs to completely match an unused area 502 on the lower right side in Fig. 5.

In other words, since the print range of the JobX printed alone matches the unused area in Fig. 5, the JobX can be composited with the JobA, JobB, and JobC. It is therefore possible to output the JobX composited with the JobA, JobB, and JobC (possible to composite the print jobs). However, a print job whose print range has a different size cannot be composited with the JobA, JobB, and JobC. A print job is inappropriate for composition if at least one side of its print range is too long or too short.

For the composite print job obtained by additionally compositing the JobX, it is necessary to employ a larger one of the number of sheets to be printed by the composite print job before composition of the JobX and that to be printed by the JobX alone. For example, assume that the number of sheets to be printed by the composite print job before composition of the JobX is set to 10, and the JobX which requires printing of 15 sheets is additionally composited. In this case, the number of sheets to be printed is set to 15. The additional composition will also be referred to as interrupt gang-up.

Referring to Fig. 6, the print range of a print job JobD is assigned to a paper sheet larger than the print range. In Fig. 6, an area 602 below the JobD is an unused area which is not assigned to any print job.

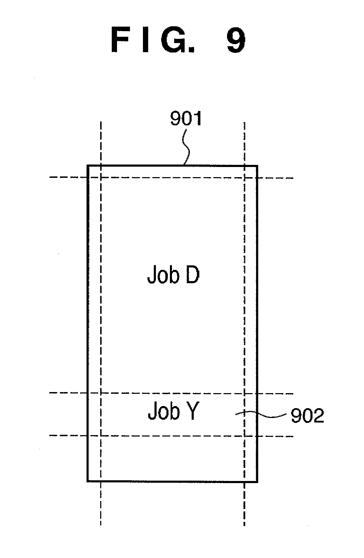

Fig. 9 is a view showing a printed product 901 by a composite print job obtained by compositing the print job shown in Fig. 6 with a print job JobY different from the JobD. As shown in Fig. 9, in cutting using the inline finisher, the width (horizontal direction) of the print range of the JobY to be composited must match the width (horizontal direction) of the unused area 602 in Fig. 6. As long as the widths match, the print job can have any size in the lengthwise (vertical) direction (i.e., paper conveyance direction) within the unused area.

Referring to Fig. 7, one composite print job is formed by compositing three print jobs JobE, JobF, and JobG. The cut marks are also composited and printed. A plurality of sheets are printed, as in Fig. 5. In Fig. 7, a lower right area 702 is an unused area which is not assigned to any print job.

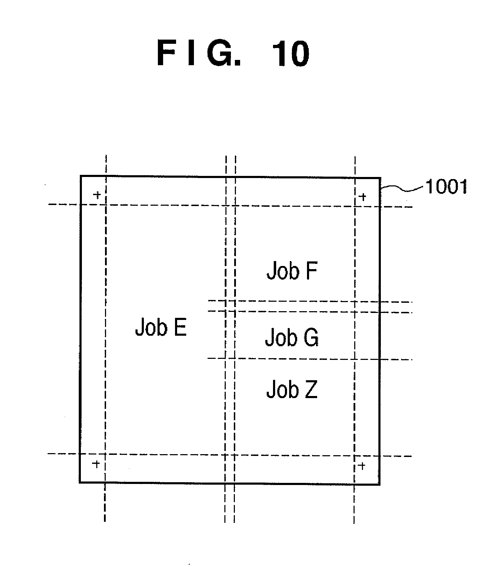

Fig. 10 is a view showing an example of a printed product 1001 by a composite print job obtained by additionally compositing still another print job JobZ with the print jobs shown in Fig. 7. As shown in Fig. 10, the cutting device 5 can cut the paper sheet an arbitrary number of times at arbitrary positions in both the vertical and horizontal directions. For this reason, any print job having an image size (i.e., print range) within the unused area 702 can be composited.

Fig. 8 shows a condition necessary for a print job to be additionally composited without changing the type of the cutting device used in Fig. 5. That is, the condition for additional composition is that the print range of a print job to be added should be equal to the unused area 502 in Fig. 5. Fig. 9 explains a condition necessary for a print job to be added without changing the type of the cutting device used in Fig. 6. This also applies to Figs. 10 and 7.

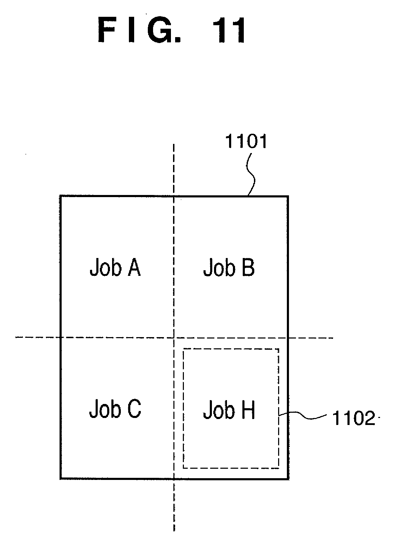

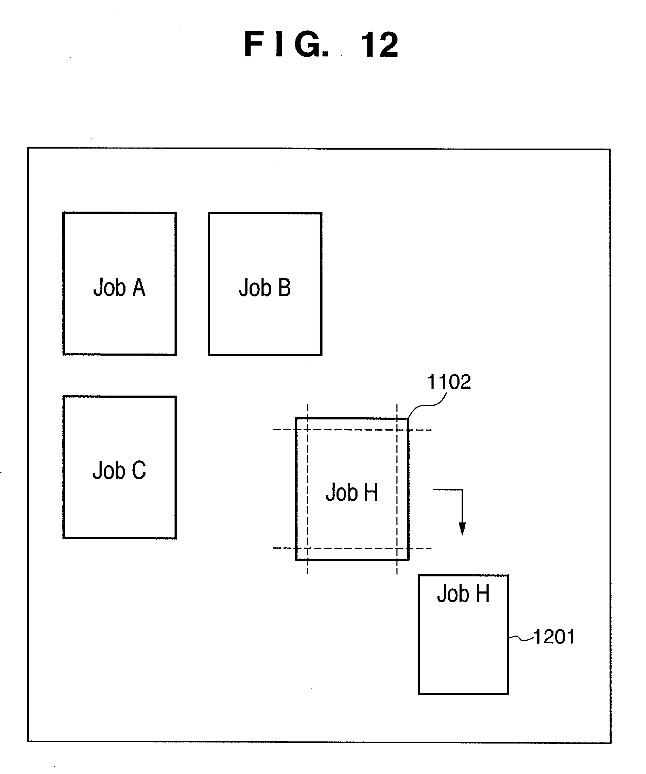

In some cases, print job composition is enabled by changing the type of the cutting device or adding a cutting process by another cutting device. For example, Fig. 5 shows an example of cutting using the cutting device 4. However, when the cutting device 5 is used, the print range of a print job to be additionally composited need not always completely match the unused area 502. The print job to be additionally composited need only have a print range within the unused area 502. Fig. 11 shows an example. In the example shown in Fig. 11, a print job JobH having a print range smaller than the unused area 502 in Fig. 5 is additionally composited with the print jobs in Fig. 5. In this case, first, the cutting device 4 quarters the paper sheet shown in Fig. 11, as shown in Fig. 12. Then, a printing paper sheet 1102 of the JobH generated by quartering the paper sheet is further cut in accordance with the size of the JobH by using another cutting device such as the cutting device 5 of an unrestricted type. As a result, various kinds of print jobs can additionally be composited, although the print job process time increases.

[Selection of Print Job to be Selected] An interface for selecting a compositable print job when print jobs to be composited are limited by the post-process conditions (e.g., the functions of the cutting device), as described above, will be described.

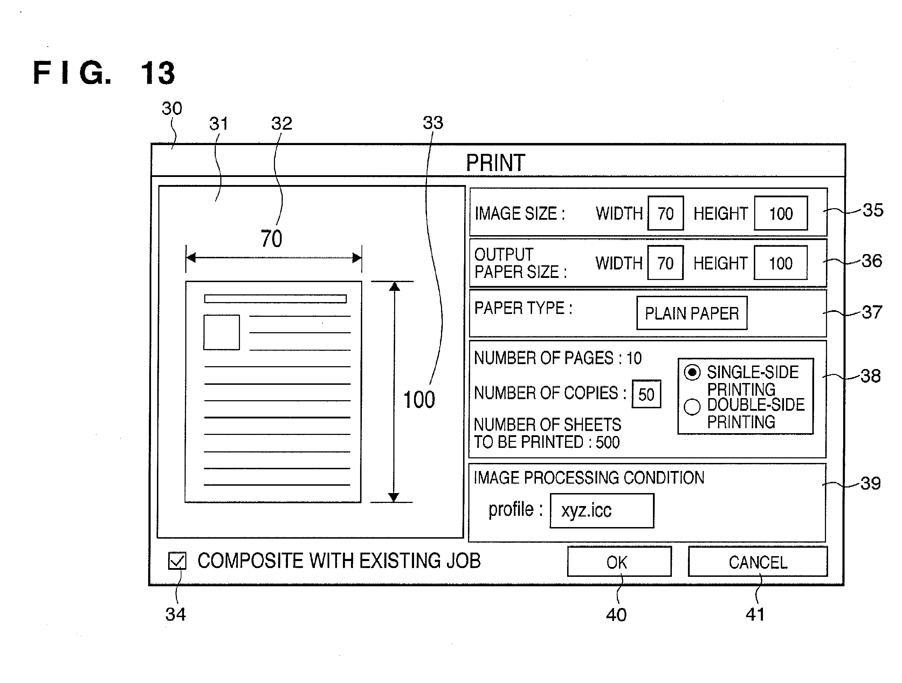

Fig. 13 is a view showing an example of a print setting user interface which operates in the client PC 1 of the system. When the user selects a print process of an application running on the client PC 1, the UI unit 10 is invoked to display the screen shown in Fig. 13.

The application sends print data using settings on a user interface 30 and the print job submitting unit 11 in Fig. 4.

Referring to Fig. 13, the user interface 30 indicates a print setting screen. The user operates this user interface using a pointing device such as a mouse, and a keyboard.

A preview area 31 displays an image representing the printing paper sheet size (i.e., print range) of a print job to be printed (target print job). The size of the printing paper sheet is represented by a width 32 (width value = "70") and a height 33 (height value = "100").

An image size 35 indicates the original size of the image to be output. The size of the print range of the target print job printed alone is displayed in this field. A paper size 36 indicates the size of the printing paper sheet. A preview image to be displayed in the preview area 31 and print data (or its part) to be sent to the printer are decided in accordance with the settings in Fig. 13.

A paper type 37 is a field to designate the type of the printing paper sheet. When a plurality of print jobs are composited, the composited print jobs must share a paper sheet. Hence, in compositing print jobs, it is necessary to use the common paper type. Examples of designable paper types are plain paper, coated paper, and OHP sheet.

A printed sheet count 38 is a field to do settings about the number of sheets to be printed. Output data from an application decides the number of pages. The number of sheets to be printed is decided by the number of pages, setting of the number of copies, and setting of double-side printing/single-side printing. In compositing print jobs, print jobs having almost the same number of sheets to be printed are convenient for composition because wasted paper sheets can be decreased. Hence, printed sheet count information is also referred for print job composition.

An image processing condition 39 is a field to do settings about image processing conditions. In many cases, composited print jobs must share the same image processing conditions. Hence, this information is also referred for print job composition. In Fig. 13, the target print job is set to use a profile named "xyz.icc".

A composition check box 34 selects whether to gang the target print job with a print job already in a print wait state. The print job already in the print wait state indicates an existing print job rendered and stored in the queue 16 of the server PC 2. If the check box 34 is not selected (checked), the print job designated by the user interface in Fig. 13 is independently submitted to the server PC 2. If the check box 34 is selected (checked), the user selects another print job to be ganged. After the selection, the target print job is submitted to the server PC 2.

A button 40 determines print job submission. A button 41 cancels printing.

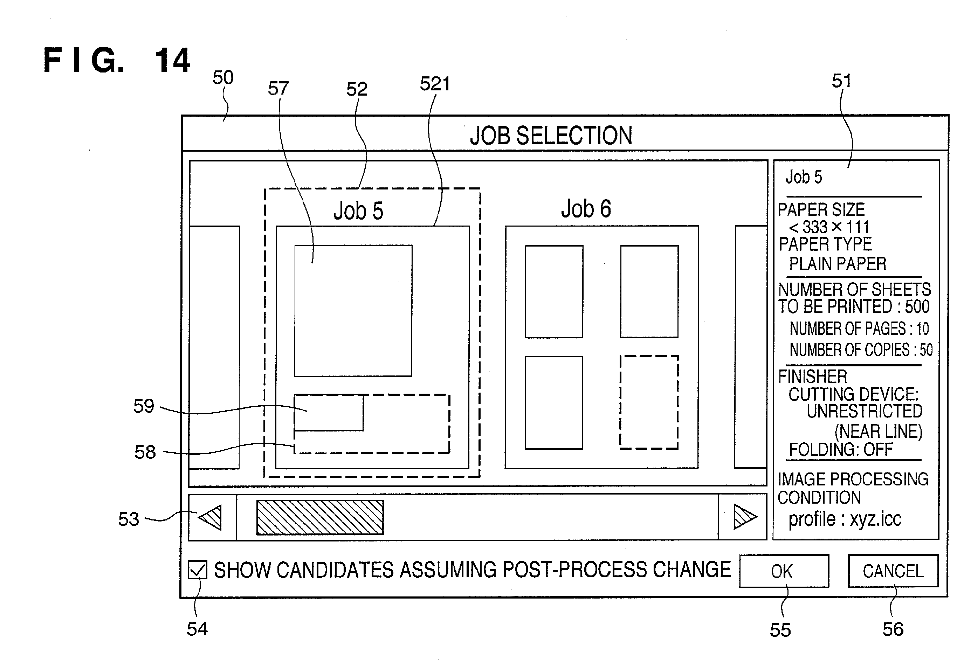

Fig. 14 shows anther example of a screen which is displayed when the user selects the check box 34 and clicks on the OK button 40 on the user interface shown in Fig. 13. On this user interface, the use can select a print job to be composited with the target print job from existing print jobs stored in the queue 16.

Referring to Fig. 14, a user interface 50 indicates a print job selection screen. The user operates this user interface using a pointing device such as a mouse. In Fig. 14, a preview image based on "Job 5" is selected as a print job to be composited with the target print job.

An attribute display area 51 displays information about the currently selected print job. Fig. 14 shows information when "Job 5" is selected. Not only the attribute information of the print job but also information representing the conditions of a print job that can be composited with "Job 5" is displayed. Pieces of print job attribute information are often common to the conditions of a compositable print job.

In the example shown in Fig. 14, information about a compositable print job is displayed, in which the paper size is "< 333 × 111", i.e., smaller than 333 × 111, and the paper type is "plain paper". Additionally, the displayed information represents that the number of sheets to be printed is 500 because the number of pages is 10, and the number of copies is 50, a cutting device to be used is of an unrestricted type, the folding process is not performed, and a profile named "xyz.icc" is to be used as the image processing condition. These indicate the conditions of a compositable print job, and the attribute information of "Job 5", too.

A list display 52 is an area to display a list of preview images of compositable print jobs selected from the existing print jobs waiting in the queue 16. The user selects a composition target print job by clicking on the image of the print job in the list display. Each print job is represented by a paper frame 521 that indicates a designated paper size. A job frame 57 represents the print range, in the paper, of a print job that is already assigned to (i.e., composited with) the print job and is indicated by a solid line. That is, the job frame 57 is the print range of "Job 5". A blank frame 58 represents an unused area that can be composited with "Job 5" and is indicated by a dotted line. That is, the blank frame 58 is the area to lay out the target print job. A focus frame 59 represents the print range of the target print job to be composited. The user can freely move the focus frame 59 within the range of the blank frame 58 using a mouse or the like.

The user uses a scroll bar 53 to display hidden preview images in the list display 52. A post-process change check box 54 selects whether to display existing print jobs that can be selected as a print job composition target when a post-process of, e.g., a cutting device is added or changed. For example, when the cutting device 4 is used, the target print job JobH of the example shown in Fig. 11 cannot be composited with the composite print job in Fig. 5, as described above. Hence, if the check box 54 is not selected, the composite print job in Fig. 5 is not displayed as a target to be composited with the target print job JobH. On the other hand, if the check box 54 is selected, the composite print job in Fig. 5 can be composited with the target print job JobH by changing the cutting device 4. For this reason, the composite print job in Fig. 5 is displayed in Fig. 14. That is, the user can increase the number of choices of existing print jobs to be composited with the target print job by checking the check box 54. However, some existing print jobs require to change the post-process when selected as the composition target print job, and this may influence the print job process time.

When the user selects an existing print job to be composited and clicks on an OK button 55, the image composition unit 14 is instructed to submit the target print job designated for print job composition. When the user clicks on a cancel button 56, print job submission is canceled.

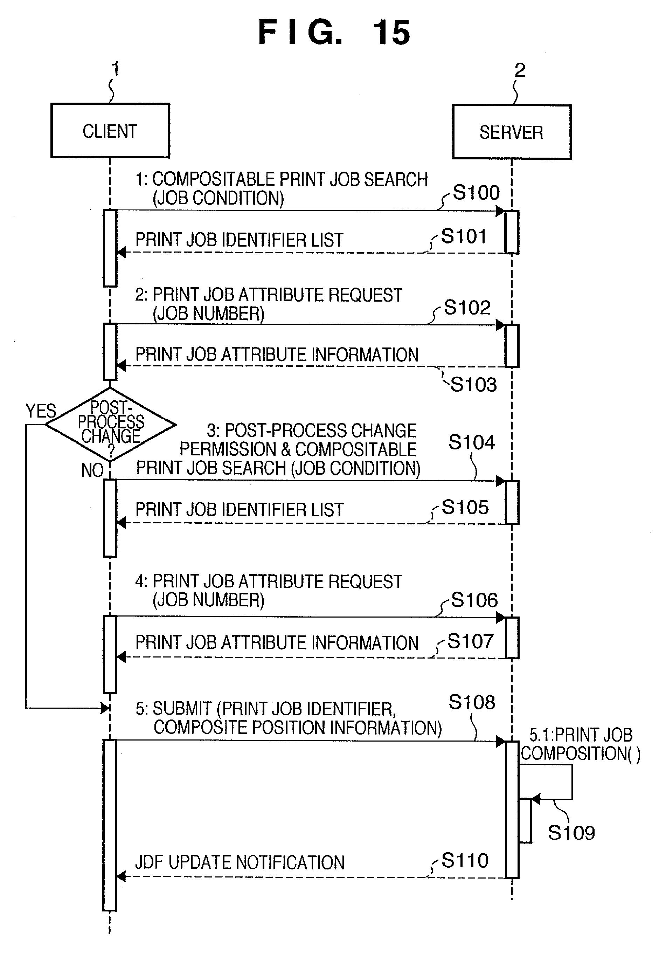

[Information Exchange in Selecting Composite Print Job] Data exchange executed until the user submits, from the client PC 1, a print job for print job composition by gang-up will be described next. Fig. 15 is a sequence chart showing an example of data exchange associated with print job information exchanged between the client PC 1 and the server PC 2. When the user checks the check box 34 in the user interface 30 on the client PC 1, the client PC 1 sends a print job search request to the server PC 2 to obtain the information of existing print jobs waiting in the queue 16 (S100). At this time, the client PC 1 sends the information of a print job to be submitted (to be referred to as print job information) as a print job condition for print job composition together with the search request. The information to be sent is print job attribute information including a paper size, paper type, number of sheets to be printed, and image processing condition displayed in the attribute display area 51 in Fig. 13.

In response to this, the server PC 2 searches the queue 16 for existing print jobs that can be composited with the target print job on the basis of the received print job information (print job condition). As a result of search, the server PC 2 sends a list of identifiers of existing print jobs that satisfy the print job condition (S101).

The client PC 1 designates a print job identifier and sends a print job attribute information sending request to the server (S102). The server PC 2 sends, to the client PC 1, the attribute information of the existing print job corresponding to the received print job identifier (S103). The client PC 1 repeats the sending and reception in S102 and S103, as needed, thereby collecting information necessary for preview display in Fig. 14. The pieces of print job attribute information acquired here will be referred to as a print job list.

If the check box 54 in Fig. 14 is checked, the client PC 1 sends, to the server PC 2, an instruction to allow post-process change and a request to search for print jobs that can be composited with the target print job if the post-process is changed (S104). In response to the search request in S104, the server PC 2 sends a list of identifiers of compositable print jobs under the condition of post-process change (S105). Upon receiving the print job identifier list, the client PC 1 designates a print job identifier and sends a print job attribute information sending request to the server (S106). The server PC 2 sends, to the client PC 1, information about the print job corresponding to the received print job identifier (S107). The client PC 1 repeats the sending and reception in S106 and S107, as needed, thereby collecting information necessary for preview display in Fig. 14. The information about the print job, which is sent in S107, is at least one of the setting information of the print job and the image data of the print job. If the post-process change check box 54 is not checked, the process skips S104 to S107.

When the user selects an existing print job as a composition target on the user interface 50 shown in Fig. 14, the client PC 1 sends the print job identifier of the selected print job to the server PC 2 and simultaneously submits the target print job (S108). If the user designates the composite position of the target print job, the client PC 1 also sends information about the composite position of the target print job in the existing print job in S108. That is, the client PC 1 sends, to the server PC 2, the identifier of the print job selected from the preview display in Fig. 14. The server PC 2 gangs (composites) the designated print jobs with each other (S109). The server PC sends the updated JDF to the client (S110).

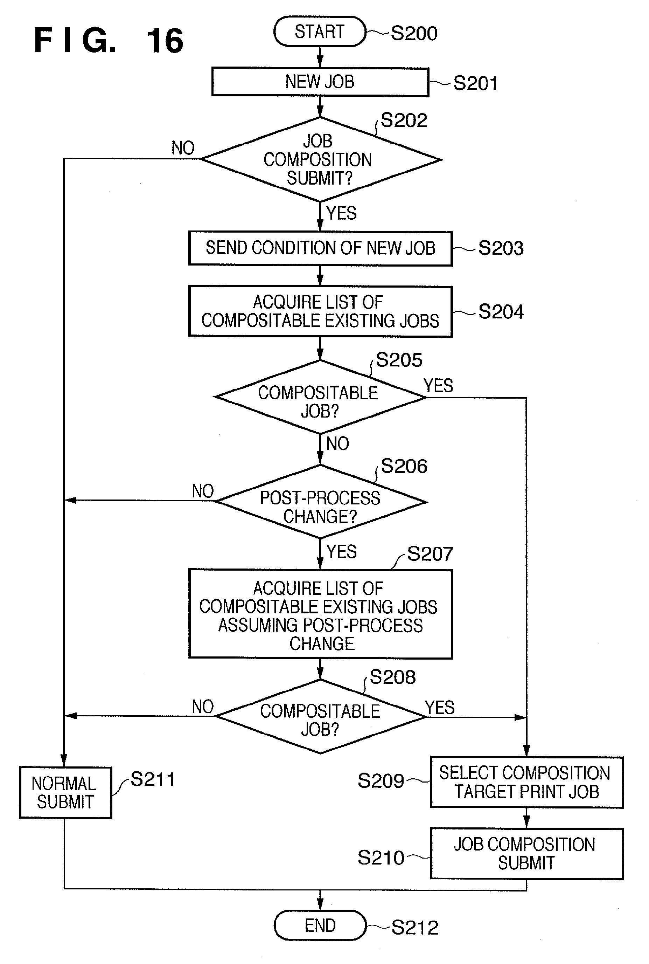

Fig. 16 is a flowchart illustrating an example of a print job submitting process with a designation of print job composition (gang-up) by the print job submitting unit 11 of the client PC 1. In step S200, the process starts. In step S201, the client PC 1 generates a new print job. More specifically, when the user designates print execution on, e.g., an application program, application data is transferred to the OS or printer driver so that a new print job is generated.

In step S202, the print job submitting unit 11 determines whether to composite the new print job with an existing print job. If the user checks the check box 34 in Fig. 13 and clicks on the OK button 40 in this state, the print job submitting unit 11 determines to execute print job composition. Hence, the new print job is the target print job. To composite the new print job with an existing print job (i.e., to execute print job composition), the process advances to step S203. To execute normal print job submission, the process advances to step S211. In step S211, a normal print job submitting process (i.e., print job sending) is executed. The new print job is placed at the end of the queue 16 of the server PC 2.

In step S203, the new print job is the target print job to be composited with an existing print job. The client PC 1 sends, to the server PC 2, a print job search message together with the attribute information of the target print job as a job condition (step S203). This corresponds to the communication in S100 in Fig. 15. In step S204, the client PC 1 acquires a print job list of compositable existing print jobs. This corresponds to S101 to S103 in Fig. 15.

If the acquired print job list is not empty, the process advances from step S205 to step S209. If the print job list is empty in step S205, i.e., if there is no existing print job compositable under the condition sent in step S203, the print job submitting unit 11 determines in step S206 whether to change the post-process for composition. This corresponds to a process of causing the print job submitting unit 11 to determine whether the check box 54 in Fig. 14 is checked. If the print job submitting unit 11 determines to change the post-process for print job submission, the client PC 1 sends changed post-process information to the server PC 2, and the process advances to step S207. If the print job submitting unit 11 determines not to change the post-process, the process advances to step S211. In step S211, normal print job submission is executed.

In step S207, the client PC 1 acquires a print job list of compositable print jobs retuned in response to the sent job condition after the change of the post-process. This corresponds to the communication in S104 to S107 in Fig. 15. If the received print job list is not empty, the process advances from step S208 to step S209. If no compositable print job exists, the process advances to step S211 to execute normal print job submission.

In step S209, the client PC 1 displays the preview of the acquired print job list on the user interface in Fig. 14. The user selects a desired one of the print jobs, decides the position of the focus frame 59, and clicks on the OK button. The client PC 1 sends, to the server PC 2, the identifier of the existing print job selected at this time and information (composite position information) representing the print range of the target print job as the print jobs to be composited. The client PC 1 also submits the target print job to the server PC 2 as a print job to be composited. For example, the client PC 1 adds, to the attribute information of the print job, information representing that the print job is the composition target print job and sends the target print job to the server PC 2.

In step S210, the server PC 2 composites the target print job with the existing print job selected from the queue 16 and updates the JDF of the composite print job registered in the print job database 13. At this time, the server PC updates cut setting information such that each print job included in the composite print job is laid out on a corresponding paper sheet divided by cutting the printed product of the composite print job. The cut setting information is updated by updating the cut position of the newly added target print job to be composited and increasing the number of composited print jobs.

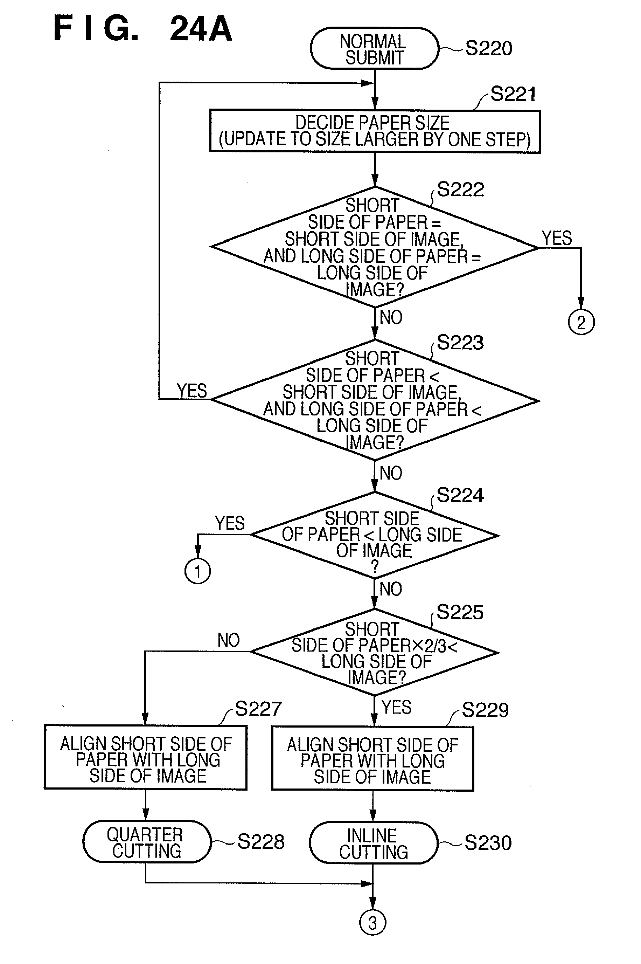

The normal print job process and print job composition process in the server PC 2 will be described later with reference to Figs. 24A to 25B.

Step S205 in Fig. 16 may be omitted. In this case, if the print job submitting unit 11 determines in step S206 not to change the post-process, the process branches to a point between steps S207 and S208. With this change, the candidates of existing print jobs to be composited with the target print job can include both print jobs that can be composited without a change of the post-process and print jobs that can be composited after a change of the post-process.

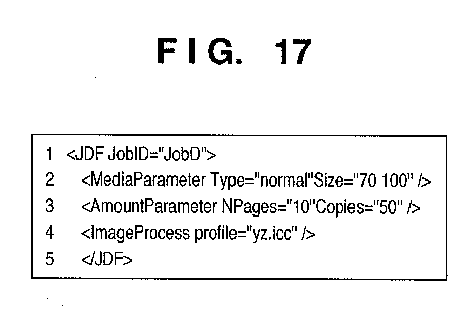

[JDF and Print Job Attribute] A data format used to exchange print job attribute information between the client PC 1 and the server PC 2 will be described next. Fig. 17 shows an example of a print job condition sent from the client PC 1 to the server PC 2 in Fig. 15. The print job condition includes information necessary for executing a single print job even after the end of rendering. The contents of data shown in Fig. 17 correspond to the setting contents of the screen shown in Fig. 13. The data format of this embodiment uses a text document format using a markup language represented by SGML or XML. The data in Fig. 17 uses a simple expression corresponding to only parts necessary for the explanation of the embodiment and does not strictly comply with the specifications of SGML or XML.

The data shown in Fig. 17 contains five lines. <JDF> in line 1 indicates the start of data description. </JDF> in line 5 is an expression corresponding to <JDF> and indicates the end of data description. Similarly, in this format, a plurality of lines between a keyword line enclosed in "<" and ">" and a keyword line having the same keyword enclosed in "</" and ">" have a description corresponding to the keyword. The keyword <JDF> describes a print job identifier.

The description between <JDF> and </JDF> further contains descriptions of three lines. Line 2 indicates a description about a printing paper sheet. Line 2 starts with "<MediaParameter", describes the values of "Type" and "Size" using equal signs, and finishes with "/>". "Type" indicates the paper type, and "normal" indicates that plain paper is designated. "Size" indicates the printing paper sheet size, and "70 100" indicates a size of width 70 × height 100.

Line 3 indicates a description about the number of sheets to be printed. Line 3 starts with "<AmountParameter" and describes the values of "Npages" and "Copies". "Npages" indicates the number of pages per copy, which is 10 pages, as can be seen. "Copies" indicates the number of copies, and 50 copies are to be printed, as can be seen.

Line 4 indicates a description about image processing. Line 4 starts with "<ImageProcess" and describes the value of "profile". The "profile" indicates the file name of the profile to be used for image processing.

As described above, the print job condition sent from the client PC 1 to the server PC 2 corresponds to a part of the print job attribute of the target print job, which is necessary for print job composition. More specifically, the print job condition is information representing the identifier, paper type, paper size, number of copies, and image processing profile. The data in Fig. 17 is merely an example, and the present invention is not limited to this.

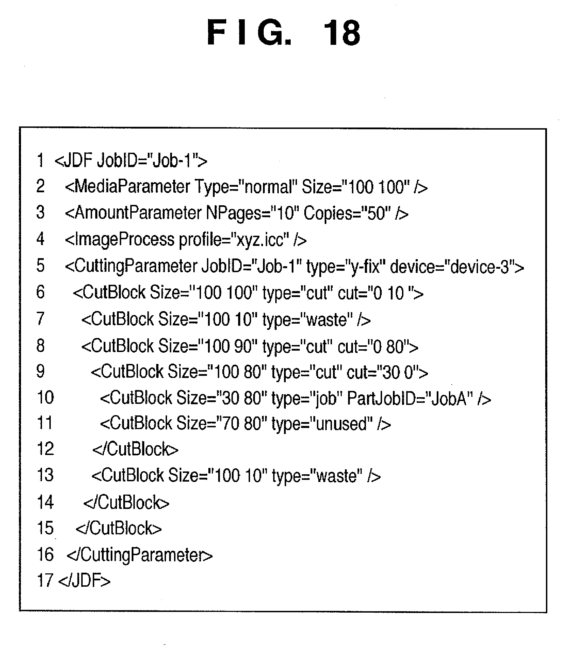

Fig. 18 shows data representing an example of a JDF stored in the print job database 13. The JDF stored in the print job database 13 also has a text format using a markup language, like the print job condition in Fig. 17.

Lines 1 to 4 and the last line (line 17) in Fig. 18 comply with the same format as the description in Fig. 17. Lines 5 to 16 describe parameters about cutting. The description of lines 5 to 16 indicates the manner the print jobs corresponding to the JDF shown in Fig. 18 are composited, and how to cut the paper sheet after printing. The computer can determine the manner the print jobs are composited, and how to cut the paper sheet after printing by referring to the job definition file (JDF).

Line 5 starting with "<CuttingParameter" describes the values of "JobID", "type", and "device". "JobID" indicates the identifier of an element print job included in the composite print job, and "type" indicates the cutting type and takes one of values "any", "xy-fix", "x-fix", and "y-fix". These values have the following meanings.

**.** "any": The size has no restriction, and arbitrary cutting is possible (if the print size of the target print job to be composited is smaller than the unused area, it is determined that print job composition is possible).

"xy-fix": Only fixed cutting is possible in both the vertical and horizontal directions (unless the print size of the print job to be composited completely matches the size of the unused area, it is determined that print job composition is not possible).

"x-fix": The horizontal size is fixed, but arbitrary cutting is possible in the vertical direction (unless the horizontal print size of the print job to be composited matches the horizontal size of the unused area, it is determined that print job composition is not possible).

**.** "y-fix": The vertical size is fixed, but arbitrary cutting is possible in the horizontal direction (unless the vertical print size of the print job to be composited matches the vertical size of the unused area, it is determined that print job composition is not possible).

Note that the vertical direction is the paper conveyance direction, and the horizontal direction is perpendicular to it (the definitions may be reversed, as a matter of course). In addition, "device" in line 5 indicates the identifier of the device to be used for cutting.

The descriptions of "<CutBlock>" in "<CuttingParameter>" have a nested structure and use a tree structure to indicate an area segmentation state upon cutting. The description of one "<CutBlock>" indicates a node of the tree structure. "<CutBlock>" describes the area size ("Size") before cutting, node type ("type"), cut position ("cut"), and print job identifier ("PartJobID") before composition corresponding to the node.

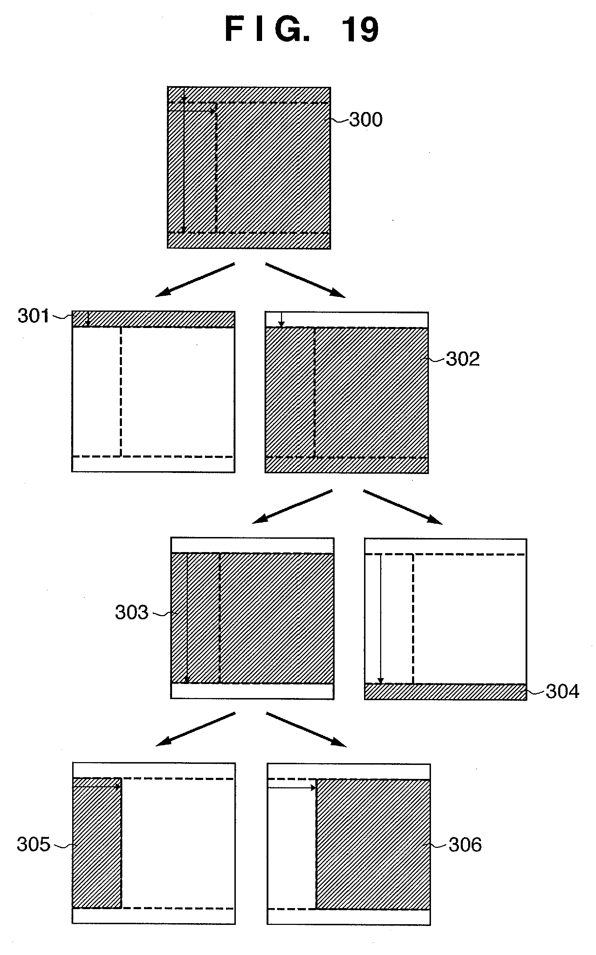

Fig. 19 shows the state of cutting shown in Fig. 18. The description in Fig. 18 will be described in detail by contrasting Fig. 18 with Fig. 19. Fig. 19 is a view schematically showing a tree structure represented by area segmentation upon cutting based on the JDF shown in Fig. 18.

Referring to Fig. 19, a root 300 of the tree structure indicates the overall area. Fig. 18 shows a description corresponding to the root 300 in line 6. The value of "Size" in line 6 is "100 100". This matches the value of "Size" in line 2 and therefore indicates the whole paper sheet, as is apparent. The value of "type" in the description of "<CutBlock>" indicates the type of the node and takes one of values "cut", "waste", "job", and "unused". These values have the following meanings. In other words, the node type indicates the use state of the area.

"cut": Cutting is further executed. The description of "<CutBlock>" has a sub node. Additionally, this node has a cut position ("cut") to cut this area (i.e., this node is a branch node).

"waste": The node is discarded without being used. No further cutting is executed. The node has no sub node (i.e., the node is a leaf node).

**.** "job": The node is used for one of the composited print jobs. The node has a corresponding print job identifier ("PartJobID") before composition. The node has no sub node.

"unused": The node indicates an unused area where a new print job can be composited. The node has no sub node.

The value of "type" in line 6 is "cut". Hence, the paper sheet is further cut so that the area is segmented into areas 301 and 302 shown in Fig. 19. The cut position is "10" vertically from the upper edge, as indicated by the value ("0 10") of "cut" in line 6 (the first parameter indicates the vertical coordinate value in Fig. 19, and the second parameter indicates the horizontal coordinate value).

The area 301 in Fig. 19 corresponds to line 7 in Fig. 18. When the paper sheet is cut at the cut position indicated by line 6, the area 301 has a width of 100 and a height of 10. Cutting shown in Figs. 18 and 19 is done using an inline finisher as shown in Fig. 9. The area 301 is discarded, as indicated by the value of "type" in line 7.

The area 302 in Fig. 19 corresponds to line 8 in Fig. 18. The area 302 has a width of 100 and a height of 90. The area 302 is further cut so that the area is segmented into areas 303 and 304.

The area 303 in Fig. 19 corresponds to line 9 in Fig. 18. The area 303 has a width of 100 and a height of 80. The area 303 is further cut so that the area is segmented into areas 305 and 305.

The area 304 in Fig. 19 corresponds to line 13 in Fig. 18. The area 304 has a width of 100 and a height of 10. The area 304 is discarded.

The area 305 in Fig. 19 corresponds to line 10 in Fig. 18. The area 305 has a width of 30 and a height of 80. An identifier "JobA" is assigned to this area, and "JobA" is output as a result of cutting.

The area 306 in Fig. 19 corresponds to line 11 in Fig. 18. The area 306 has a width of 70 and a height of 80. Since this area is an unused area, another print job can be composited here. However, the print job shown in Fig. 18 undergoes cutting with a fixed height, as indicated by the value of "type" in line 5. For this reason, a print job to be assigned to the area 306 must have a height of 80 and a width of 70 or less. A print job having a height of 80 or less and a width of 70 or less can also be composited by changing the cutting type to "any". This condition limits compositable print jobs.

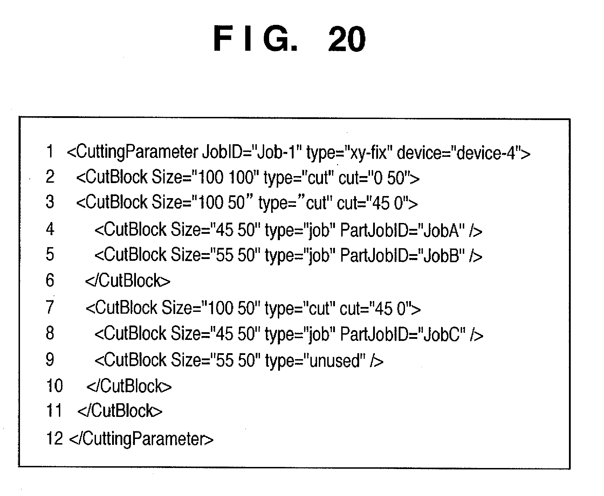

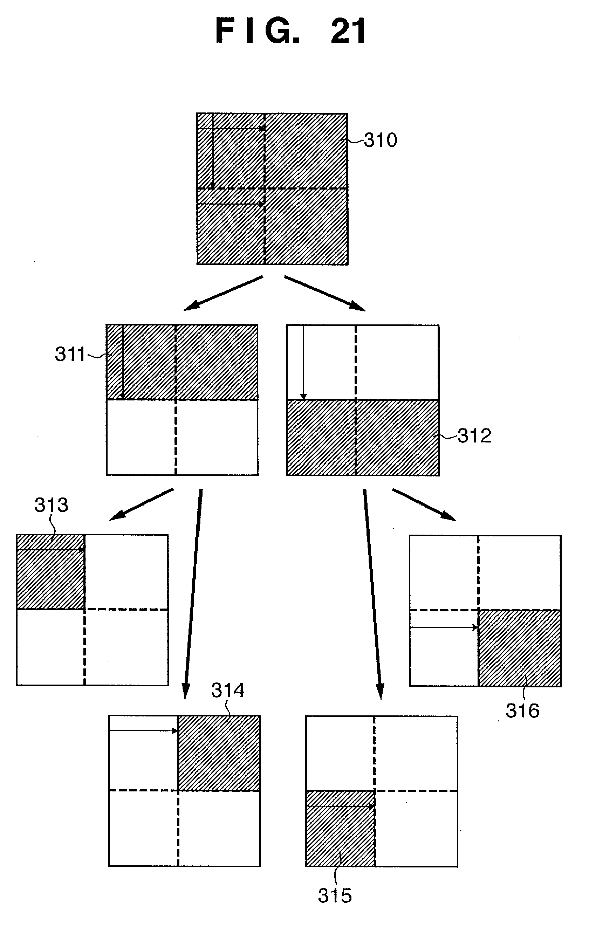

Figs. 20 and 21 show another example of the JDF. Fig. 20 shows only a portion of <CuttingParameter>. The JDF shown in Fig. 20 describes use of a cutting device having fixed vertical and horizontal cut positions as a cutting width (type = "xy-fix" in line 1).

The cut areas shown in Fig. 21 and the description shown in Fig. 20 have the following relationship. An area 310, area 311, area 312, area 313, area 314, area 315, and area 316 in Fig. 21 correspond to line 2, line 3, line 7, line 4 (JobA), line 5 (JobB), line 8 (JobC), and line 9 (unused area) in Fig. 20, respectively. In the example shown in Fig. 20, line 9 has a description indicating an unused area. Only a print job whose print range has a width of 55 and a height of 50 can additionally be composited with the composite print job.

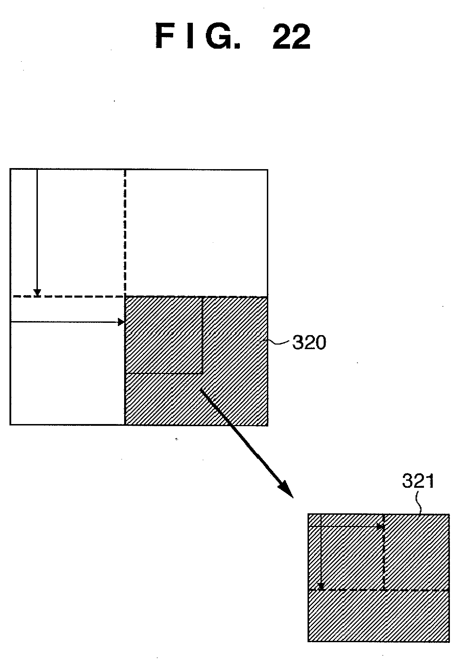

Fig. 22 shows an example in which the area 316 in Fig. 21 is cut using a cutting device of a cutting type "any" to composite a print job having a size of 55 × 50 or less. In the example shown in Fig. 22, the area 316 in Fig. 21 is cut using a cutting device of a cutting type "any". An area 320 in Fig. 22 corresponds to the area 316 in Fig. 21. A print job whose print range of 55 × 50 or less corresponds to the cut size of the cutting device in Fig. 21 is laid out in the unused area. An area 321 is cut by another cutting device in accordance with the print range of the target print job laid out in the area 320.

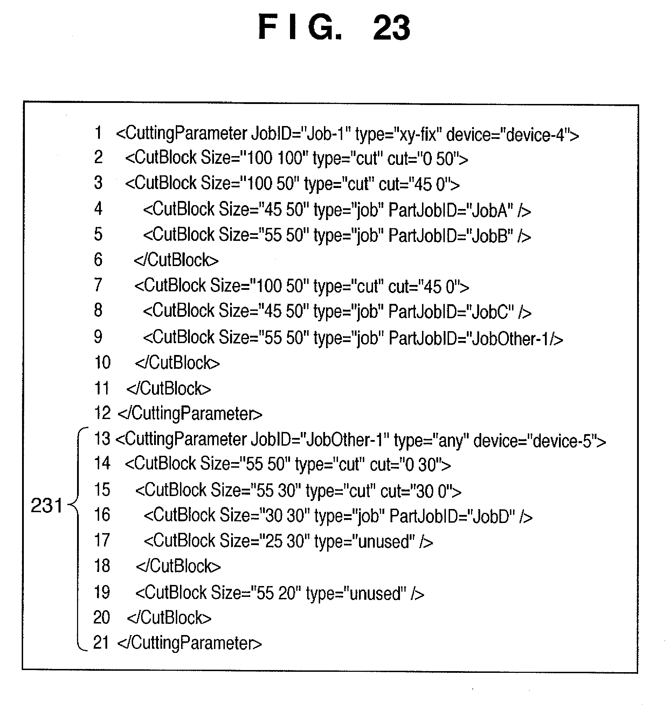

Fig. 23 shows an example in which the process shown in Fig. 22 is described by the JDF of the system according to this embodiment. The contents of lines 1 to 12 in Fig. 23 are almost the same as in Fig. 20 because the process until cutting of the area 316 in Fig. 21 is executed using the same cutting device as in the description in Fig. 20. In line 9, however, to composite a new element print job, "type" is changed to "job", and the value of "PartJobID" is set to "JobOther-1" that is the identifier of the new print job. In this case, "JobOther-1" corresponds to a description 231 of lines 13 to 21. Lines 13 to 21 indicate that a cutting device "device-5" should further cut the print range 320 of the print job "JobOther-1" indicated by line 9. If the JDF includes a plurality of cutting descriptions, as shown in Fig. 23, the post-process control unit 17 in Fig. 4 instructs each post-processing device to execute a process of a corresponding cutting description. As a result, even when "JobD" having a size of 30 × 30 in line 16 is composited, the JDF described in Fig. 23 can cut the area into that size.

If composition as shown in Fig. 23 is executed, the post-processes take an extra time. Hence, such print job composition is not always executed. The user determines the effect of print job composition. Only when the print job composition can provide an effect regardless of an extra time required, the user can select the composition method. If the user can determine that print job composition assuming a change of the post-process can provide an effect he/she checks the check box 54 in Fig. 14. As a result, the process in S104 to S107 in Fig. 15 is executed.

In the example shown in Figs. 22 and 23, a post-process is added. Alternatively, the cutting device may be changed to execute a post-process of cutting type "any" throughout the sequence. A single print job that is not composited with another print job and uses no cutting process can also undergo print job composition by gang-up by changing the whole paper size and executing a similar JDF change process. That is, the JDF serving as print setting information contains cut setting information including at least the cutting device type, cut position, and the use state of each cut area, as shown in Figs. 18, 20, and 23.

[Normal Print Job Process] Procedures of determining whether print job composition is possible and compositing print jobs will be described next in detail assuming the above-described JDF data format. Settings of a cutting process in normal print job submission without print job composition of this embodiment will be described first.

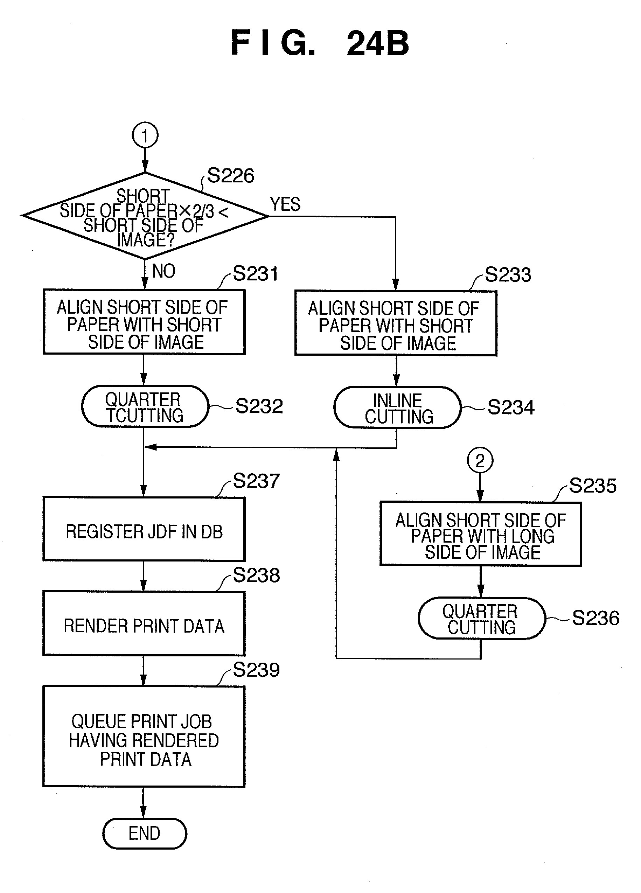

Figs. 24A and 24B is a flowchart illustrating an example of a procedure of deciding print job layout on a paper sheet and cut settings. The image composition unit 14 executes this procedure.

In normal print job submission in step S211 shown in Fig. 16, the settings of the print job are decided in accordance with the procedure shown in the flowchart of Figs. 24A and 24B.

In step S220, print job submission starts. In step S221, the server PC 2 decides the paper size. A minimum paper size supported by the designated printer is selected first because the paper size may be updated in accordance with the layout of the print range of the print job.

In step S222, the server PC 2 determines whether the currently selected paper size matches the print size (print range size) of the print job. If they match, the process advances to step S235. In step S235, the server PC 2 lays out the print range on the paper sheet by aligning the short and long sides of the paper sheet with those of the print range such that the paper size matches the print size of the print job. In this case, no cutting process is executed, and therefore, no cut setting is added to the JDF. In accordance with such settings, a JDF having the decided cutting device and cut setting (no cut setting exists in this case) is created (S236) However, the JDF describes print settings except the cut settings. The server PC 2 registers the created JDF in the print job database 13 (S237). The rendering unit 15 renders print data in accordance with the decided print range position and other print settings (e.g., profile) (S238). As a result, the rendering unit 15 inputs, to the queue 16, the print job converted into image data (S239).

If the server PC 2 determines in step S222 that the paper size does not completely match the print size of the print job, the process advances to step S223. In step S223, the server PC 2 determines whether the print job has a print size within the currently selected paper size. If the server PC 2 determines that the print size falls within the paper size, the process advances to step S224. Otherwise, the process returns to step S221 to update the paper size to a larger size by one step. Assume that the designated printer supports the paper size corresponding to the print size of the new print job. Hence, the procedure assumes that the corresponding paper size is surely found in repeating the process in step S221.

In step S224, the server PC 2 compares the short side of the currently selected paper size with the long side of the print size of the print job. This process is executed to determine whether the image can be rotated by 90° with respect to the paper sheet. If the short side of the paper sheet is shorter than the long side of the image, the process advances to step S226. If the short side of the paper sheet is equal to or longer than the long side of the image, the process advances to step S225.

In step S225, the server PC 2 compares a predetermined ratio of the short side of the paper sheet with the long side of the image. This process is executed to determine whether the long side of the image is much shorter than the short side of the paper sheet. If the long side of the image is much shorter than the short side of the paper sheet, the server PC 2 can determine that it is possible to efficiently use the paper sheet by quartering it. In this embodiment, the criterion for "much shorter" is whether the long side of the image is shorter than 2/3 the short side of the paper sheet. The image layout and cutting means may be selected in accordance with any other criterion, as a matter of course. If the long side of the image is equal to or shorter than 2/3 the short side of the paper sheet, the process advances to step S227. Otherwise, the process advances to step S229.

In step S227, the image composition unit 14 aligns the short side of the paper sheet with the long side of the image. In step S228, the image composition unit 14 sets the contents of the JDF to cut the paper sheet using a quarter cutting device. More specifically, the image composition unit 14 designates a quarter cutting device as the cutting device and specifies the print range of the new print job that is laid out by aligning the short side of the paper sheet and the long side of the image. The image composition unit 14 creates a JDF which sets, in the cut settings, the positions of cut lines to cut out the specified print range (S228). The process branches to step S237 to register the JDF and queue the print data.

In step S229, the image composition unit 14 aligns the short side of the paper sheet with the long side of the image. In step S230, the image composition unit 14 sets the contents of the JDF to cut the paper sheet using an inline finisher. Then, the process branches to step S237 to register the JDF and queue the print data.

In step S226, the image composition unit 14 compares 2/3 the short side of the paper sheet with the short side of the image. If the short side of the image is shorter than 2/3 the short side of the paper sheet, the process advances to step S231. Otherwise, the process advances to step S233.

In step S231, image composition unit 14 aligns the short side of the paper sheet with the short side of the image. In step S232, the image composition unit 14 sets the contents of the JDF to cut the paper sheet using a quarter cutting device. Then, the process branches to step S237 to register the JDF and queue the print data. In step S234, the image composition unit 14 aligns the short side of the paper sheet with the short side of the image. In step S234, the image composition unit 14 sets the contents of the JDF to cut the paper sheet using an inline finisher. Then, the process branches to step S237 to register the JDF and queue the print data. In this embodiment, to dequeue the print job from the queue 16, a predetermined trigger is input. This is done to select an existing print job to be composited from the queue.

With the above-described procedure, the normal print job serving as an existing print job is queued. In printing, the print job extracted from the queue and its JDF are sent to a designated printer to execute printing. If the JDF associated with the print job has cut settings, the cut settings are sent to a cutting device designated in them. For example, when the user who has set a paper sheet in a cutting device inputs a print job identifier from the user interface of the cutting device, the cutting device sends the received identifier to the post-process control unit 17. Upon receiving the identifier from the cutting device, the post-process control unit 17 reads out the corresponding JDF from the print job database 13 and sends it to the cutting device. The cutting device cuts the set paper sheet in accordance with the cut settings contained in the received JDF.

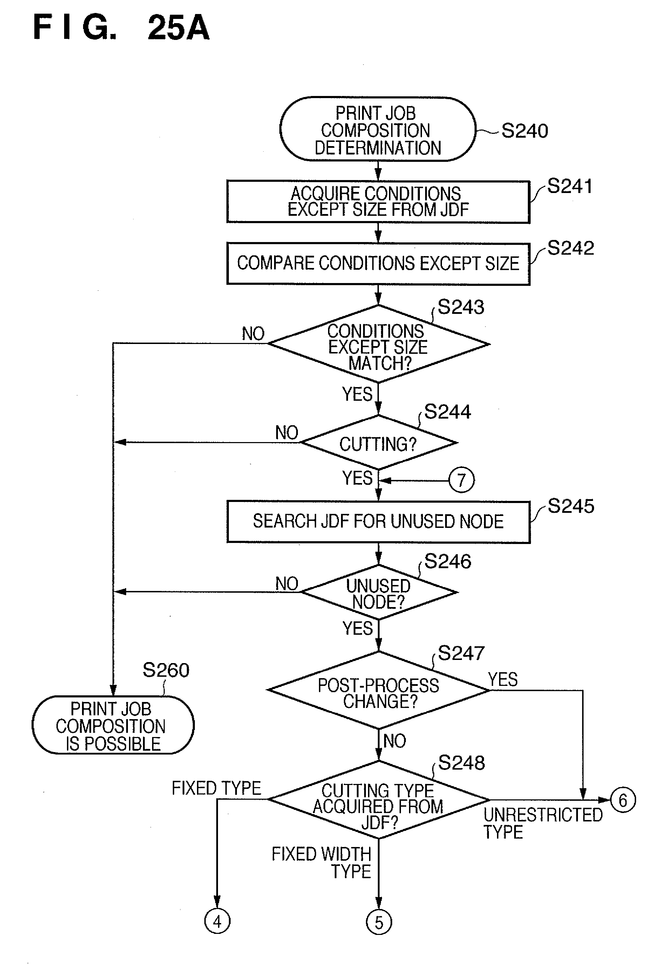

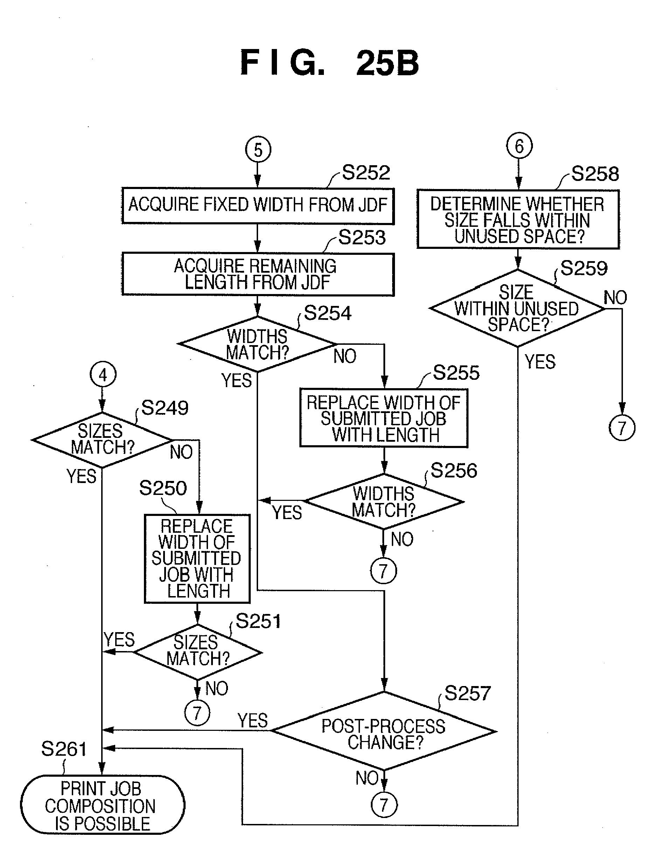

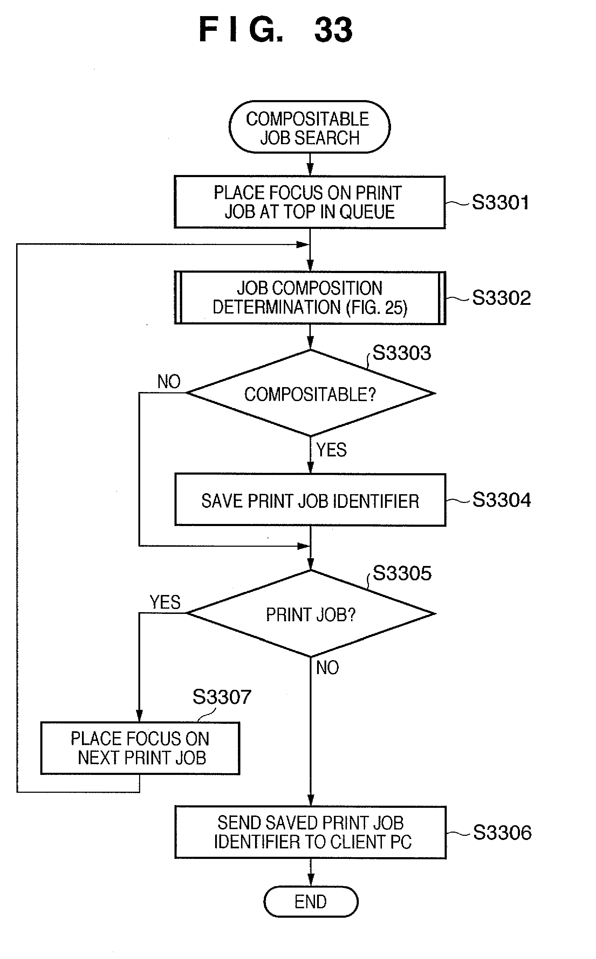

[Determination of Possibility of Print Job Composition] Determination of the possibility of print job composition will be described next. Fig. 33 shows a process of the determination unit 12 upon receiving a compositable print job search request from the client PC 1. Referring to Fig. 33, upon receiving a compositable print job search request from the client PC 1, the determination unit 12 places a focus on a specific one (in this example, the print job at the top) of the print jobs waiting in the queue 16 (S3301). Next, the determination unit 12 determines whether the print job on which a focus is placed in step S3301 can be composited with a print job having a given print job condition (print job attribute) (S3302). The process in step S3302 will be described in detail with reference to Figs. 25A and 25B. It is consequently determined whether the print job is compositable (S3303). If composition is possible, the identifier of the print job of interest is saved (S3304). This saving is additionally executed. Hence, in the initial state, the area to save the identifier is empty. On the other hand, if composition is not possible, the process of the determination unit 12 branches to step S3305. Subsequently, the determination unit 12 determines whether undetermined print jobs remain in the queue 16 (S3305). If undetermined print jobs remain, the determination unit 12 places a focus on one of them (S3307), and the process branches to step S3302. If no undetermined print job remains, the determination unit 12 sends the saved print job identifier to the client PC 1 (S3306). That is, the determination unit 12 functions as a sending means which sends, to a client terminal, information about a print job found by the search process to be described later with reference to Figs. 25A and 25B.

Figs. 25A and 25B is a flowchart illustrating an example of a procedure of determining in step S3302 in Fig. 33 whether print job composition is possible. Figs. 25A and 25B shows a procedure of determining whether each print job can be composited under conditions designated by the client to cause the server PC 2 to return a list of print jobs that allow print job composition in step S204 or S207 in Fig. 16. In Figs. 25A and 25B, it is determined for one of print jobs in the queue whether it can be composited (ganged) with a print job having given conditions.

In step S240, determination of the possibility of print job composition starts on the basis of print job conditions received from the client PC 1. In step S241, the determination unit 12 acquires, from the print job database 13, the JDF of an existing print job as a composition possibility determination target. In step S242, the determination unit 12 compares the print job attribute read out from the JDF, except size, with the conditions received from the client PC 1. The print job attribute except the size includes the paper type, number of sheets to be printed, and image processing condition, as displayed in the attribute display area 51 in Fig. 14. In this embodiment, these values are simply compared to determine whether the conditions match. In fact, the conditions need not always strictly match. For example, compositing a print job whose number of pages to be printed is 490 with an existing print job whose number of pages to be printed is 500 poses no serious problem. Conversely, when a print job whose number of pages to be printed is 510 is composited with an existing print job whose number of pages to be printed is 500, the determination unit 12 updates the JDF by changing the number of pages after composition to 510. This also applies to the remaining conditions. In this way, the determination unit 12 determines whether the difference between the set values, except cut settings, included in the print setting information of a target print job received from the client terminal and the set values, except cut settings, included in the held print setting information falls within a predetermined tolerance. It is possible to search for a print job whose set values except cut settings are within the tolerance and which has an unused area capable of incorporating the print range of the target print job.

If the conditions except the size do not match in step S243, the determination unit 12 advances to step S260 to determine that print job composition is impossible. The determination result is temporarily saved for determination in step S3303 in Fig. 33.

If the conditions except the size match, the process advances to step S244. In step S244, the determination unit 12 determines whether settings about a post-process are described in the JDF of the existing print job acquired from the print job database 13. Upon determining that the JDF does not include settings about cutting (i.e., a description of cut settings), the determination unit 12 determines that job composition is impossible, and the process advances to step S260. If the JDF includes settings about cutting, the process advances to step S245.

In step S245, the determination unit 12 investigates by referring to the JDF whether an unused area exists among areas segmented by cutting and determines the investigation result in step S246. More specifically, the determination unit 12 can determine an unused area by searching for an area for which the value of "type" of <CutBlock> is "unused". If an unused area exists, the process advances from step S246 to step S247. If no unused area exists, the determination unit 12 advances to step S260 to determine that composition is impossible.

In step S247, the determination unit 12 determines whether the print job condition from the client PC 1 allows a change of the post-process. To change the post-process, the process of the determination unit 12 advances from step S247 to step S258. If the post-process should not be changed, the process advances to step S248. In step S248, the determination unit 12 determines the cutting type read out from the JDF. In step S248, the determination unit 12 determines whether the value of "type" of <CuttingParameter> is "xy-fix". Upon determining in step S248 that the value is "xy-fix", the determination unit 12 determines that the cutting type is fixed type, and the process branches to step S249. For "x-fix" or "y-fix", the determination unit 12 determines that the cutting type is fixed width type, and the process branches to step S252. For "any", the determination unit 12 determines that the cutting type is unrestricted type, and the process branches to step S258.

In step S249, since the cutting type is fixed type, the determination unit 12 determines whether the size of the target print job to be composited completely matches the size of the unused area of the existing print job. This determination is done by comparing the value of "Size" of <CutBlock> of the JDF with the print size received as a print job condition. If the sizes match, the process advances to step S261 to determine that print job composition is possible. If the sizes do not match, the values of the vertical and horizontal sizes are replaced in step S250, and the sizes are compared again. If the sizes match, the process advances from step S251 to step S261. If the sizes do not match, the process returns to step S245 to search for another unused area. That is, the determination unit 12 searches the print jobs held in the holder for a print job having an unused area that matches the print range of the target print job.

In step S252, the value of "type" of <CuttingParameter> contained in the JDF is "x-fix" or "y-fix". Hence, the determination unit 12 determines which side has a fixed width, the vertical or horizontal side, and acquires the fixed width from the JDF. In step S253, the determination unit 12 sets the other value to the length of the other (unfixed) side. In step S254, the determination unit 12 compares the fixed width with the width of the print job. If the fixed width matches the width of the print job, the determination unit 12 determines in step S257 whether the length of the remaining side of the print job falls within the range of the unfixed side of the unused area of the existing print job. If the length falls within the range, the process advances from step S257 to step S261. If the length falls outside the range, the process returns to step S245. If the fixed width does not match the width of the print job in step S254, the values are replaced in step S255 to compare the width with the other side, and the sizes are compared again in step S256. If the sizes do not match even after replacement, the process returns to step S245. If the sizes match, the process advances to step S257.

If a change of the post-process is designated, the determination unit 12 determines ins steps S258 and S259 whether the print size of the print job designated by the print condition falls within the unused area described in the JDF of the existing print job. If the print size falls within the unused area, the process advances from step S259 to step S261. If the print size does not fall within the unused area, the process returns to step S245.

When the above-described procedure is applied to each print job in the queue, a list of print jobs that allow print job composition can be acquired. That is, the determination unit 12 functions as a searcher which searches for a print job compositable with a target print job as a new print target received from a client terminal. At this time, the determination unit 12 searches print jobs held in the holder for a compositable print job on the basis of the print setting information held in the holder and the print setting information of the target print job.

As described above, print job composition assumes that print settings except cut settings match in principal. If this assumption is satisfied, it is determined whether an additional print job can be composited in an unused area. If a print job can be composited, it is determined that composition is possible.

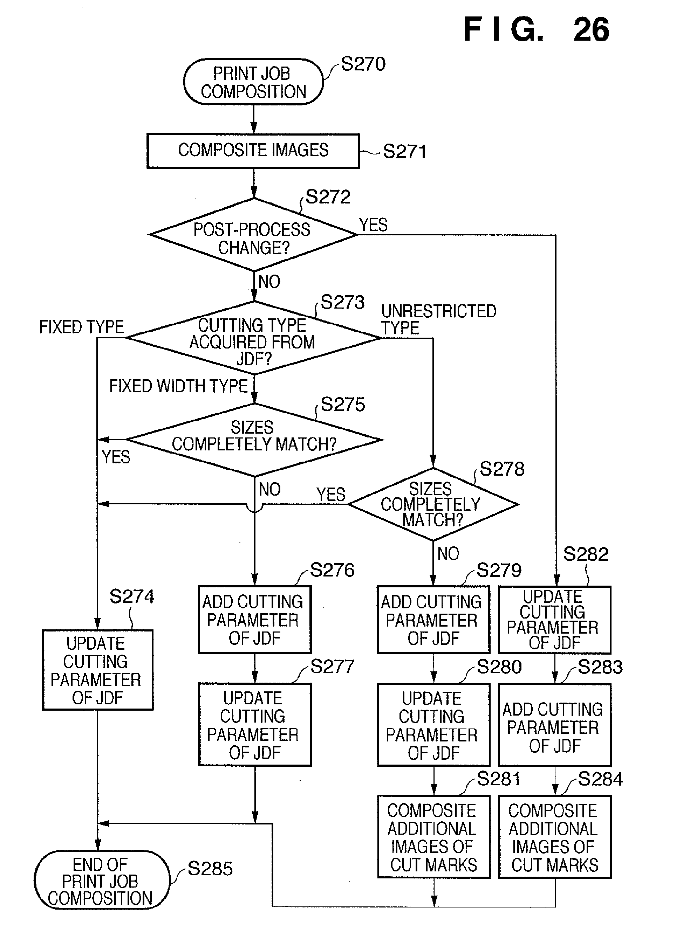

[Print Job Composition] A print job composition procedure after it is determined that print job composition is possible will be described next. Fig. 26 is a flowchart illustrating an example of a procedure of compositing print jobs. When the client PC 1 submits a print job for print job composition and sends the identifier of a selected existing print job in step S210 in Fig. 16, the print job composition process starts from step S270.

In step S271, the image composition unit 14 extracts, from the queue 16, an existing print job having the designated identifier as a composition target and composites it with the received target print job. The received target print job is composited with the existing print job such that the print range is composited with a composite position received from the client PC 1. The composited print job is placed at the position of the print job having the designated identifier in the queue 16 again through the rendering unit 15. If a post-process designation, and for example, cut settings are described in the JDF, the image composition unit 14 updates the JDF to cut a paper sheet in accordance with the element print jobs.

If a change of the post-process is designated, the process advances from step S272 to step S282. If the post-process should not be changed, the process advances to step S273. In step S273, the image composition unit 14 determines the cutting type from the JDF of the existing print job designated as the composition target. The determination method is the same as in step S248 in Fig. 25A. For fixed type, the process of the image composition unit 14 advances to step S274. For fixed width type, the process advances to step S275. For unrestricted type, the process advances to step S278.

For fixed type, the image composition unit 14 simply changes the designated value of "type" of <CutBlock> of the JDF from "unused" to "job" and adds, as its value, the identifier of the print job submitted by the client. Update of the JDF associated with the post-process finishes, and print job composition is completed in step S285.

For fixed width type, the image composition unit 14 determines in step S275 whether the width of the print size of the target print job completely matches the width of the unused area described in the JDF of the existing print job. If the image composition unit 14 determines that the sizes match, the process advances to step S274 because the process is the same as that for fixed type. If the image composition unit 14 determines that the sizes do not match, the process advances to step S276 to increase the nodes of area segmentation by cutting. In step S276, the image composition unit 14 adds a description of <CutBlock> by segmenting the unused area into two pieces at a position where the width of the unused area matches the width of the target print job. In step S277, the image composition unit 14 changes the designated value of "type" of <CutBlock> in one of the two segmented areas to lay out the target print job from "unused" to "job". The image composition unit 14 adds the identifier of the print job submitted by the client.

For unrestricted type, the image composition unit 14 investigates in step S278 whether the print size of the target print job matches the size of the unused area described in the JDF of the existing print job, like fixed width type. If the sizes match, the process advances to step S274. If the sizes do not match, the process advances to step S279.

In step S279, the image composition unit 14 increases the nodes of area segmentation by cutting. If cutting should be performed twice, it is necessary to increase the number of nodes of area segmentation by two. Otherwise, the same process as for width fixed type is executed. In step S280, the image composition unit 14 changes the designated value of "type" of <CutBlock> of a node corresponding to an area to lay out the target print job from "unused" to "job". The image composition unit 14 adds the identifier of the target print job submitted by the client. In step S281, the image composition unit 14 additionally composites images of cut marks (registry guides) corresponding to the added cuttings. This composition is composition of an image represented by print data. Hence, the print data of the print job is read out from the queue 16 again, composited with the registry guides, and stored in the queue gain.

To change the post-process, in step S282, the designated value of "type" of <CutBlock> of the node of the area to be composited is changed from "unused" to "job", and a locally decided identifier is added as the print job identifier. This corresponds to the description of line 9 in Fig. 23. In step S283, the image composition unit 14 adds a cutting process description. The cutting process description is defined as the JDF of the print job having the local identifier added in step S282. This corresponds to lines 13 to 21 in Fig. 23. Finally, in step S284, images of cut marks (registry guides) corresponding to the added cuttings are additionally composited, like unrestricted type.

The procedure of determining the possibility of print job composition in the server PC 2 has been described above. Even in the client PC 1, determination is done in accordance with the same procedure for display on the user interface, and a position where print job composition is possible is displayed on the screen. For this purpose, the client PC 1 acquires the JDF saved in the print job database as a print job attribute acquired from the server.

In this embodiment, information displayed on the interface screen in Fig. 13 or 14 has been described as conditions except the paper size. In addition, the presence/absence of a post-process such as coating, watermark, or marking whose control cannot be executed for each print job before composition is also usable for condition determination. For example, a print job having coating settings cannot be composited with a print job having settings that inhibit coating. Condition determination can be done by holding these pieces of information as data described in a JDF, as a matter of course.

Print jobs stored in the queue 16 are sent to a printer and printed in a FIFO order or a designated order. The post-process control unit 17 sends the JDF of a post-process target to a cutting device in response to a request from the cutting device, as described above. The cutting device cuts a set paper sheet in accordance with parameters described in the JDF.

When the JDF describes a process after cutting, e.g., bookbinding or binding, the composited print job should be divided into element print jobs and processed. When completion of the post-process of a composite print job is sent from the cutting device to the post-process control unit 17, the post-process control unit divides the JDF into element print jobs. For example, a description of a post-process after the cutting process in the JDF is described for each element print job. Hence, the post-process control unit can divide the JDF by reading a description for each element print job and converting it into an independent JDF (i.e., a <JDF> tag is added). The divided JDFs are transferred to a post-processing apparatus which executes the post-process of each element print job.

As described above, it is possible to determine whether print job composition by gang-up is possible in consideration of a post-process such as a cutting process and to execute print job composition.

When the queue 16 of the server PC 2 holds an existing print job, the system described in this embodiment determines whether the existing print job has an area to additionally composite an element print job, and if the area exists, executes additional composition. However, such a print job that allows additional print job composition is often already a composite print job formed by compositing a plurality of print jobs. Such a composite print job should be created by compositing a plurality of print jobs. Hence, for example, the paper size after composition is set in the printer. This enables to create a print job whose paper size is much larger than the print size and store the print job in the queue 16 in step S221 in Fig. 24A.

<Second Embodiment> The second embodiment of the present invention will be described. The basic arrangement of the second embodiment is the same as that of the first embodiment, and only the difference from the first embodiment will be described.

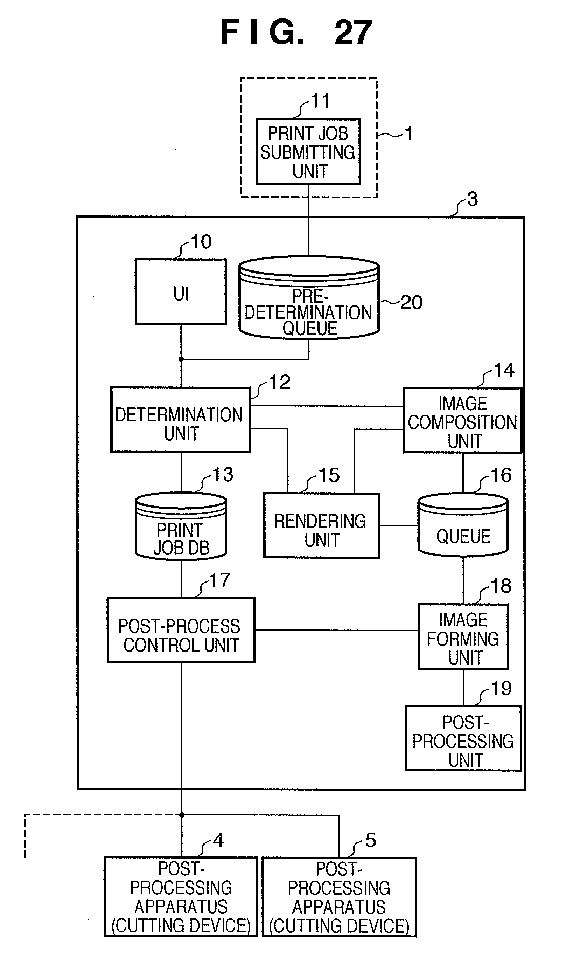

Fig. 27 is a block diagram showing an example of a functional arrangement according to the second embodiment of the present invention. The block diagram in Fig. 27 corresponds to Fig. 4 of the first embodiment. The same reference numerals as in the first embodiment denote the same functional blocks in Fig. 27. In the second embodiment, an MFP 3 incorporates the function of a server PC 2 and that of a user interface unit 10 for selecting a print job to be composited. The user interface unit 10 of the MFP 3 can fundamentally implement the same function as in the first embodiment except that a touch panel is used in place of the pointing device, or the resolution is slightly different.

Referring to Fig. 27, a pre-determination queue 20 temporarily stores a print job received from a client PC 1. The print job stored in the queue 20 undergoes selection for normal print job submission on the user interface of the MFP 3 or print job composition by gang-up.

When the MFP 3 incorporates the functional blocks associated with print job composition, the client PC 1 can obtain the effect of the present invention without arranging the server PC 2.

As described above, in this embodiment, the printer incorporates a server. This arrangement allows to determine whether print job composition by gang-up is possible in consideration of a post-process such as a cutting process and to execute print job composition without arranging the server PC.

<Third Embodiment> The third embodiment of the present invention will be described. Only the difference between the third embodiment and the first embodiment will be described. In the first embodiment, a client sends print job conditions, and a list of print jobs that allow print job composition is returned on the basis of the print job conditions. The client PC 1 which submits a print job may determine not to execute print job composition if the newly submitted print job cannot be composited with the print job at the top of the queue 16. In this case, determination of the possibility of print job composition is preferably avoided for unnecessary print jobs (i.e., print jobs except that at the top).

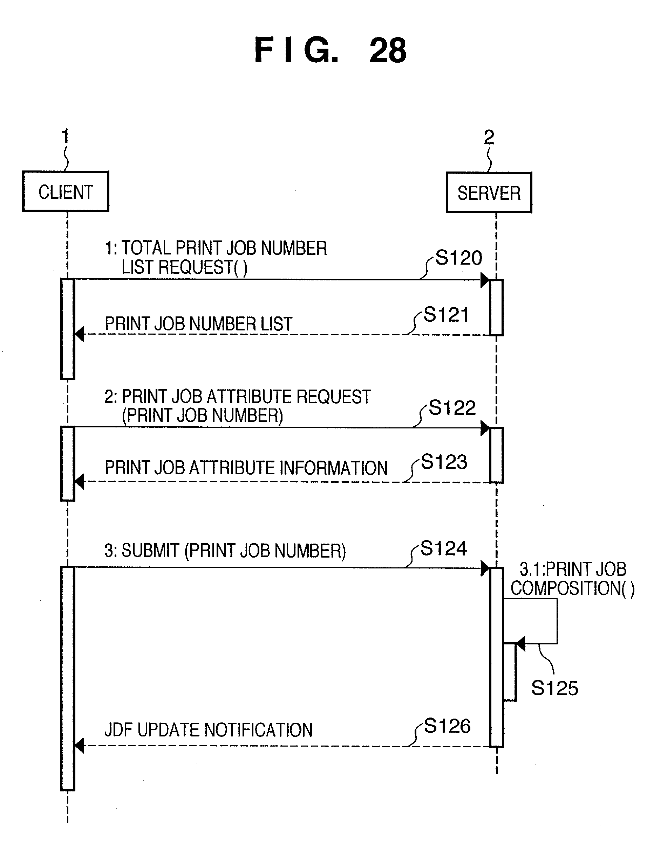

Fig. 28 is a sequence chart showing an example of a print job information exchange sequence according to the third embodiment. Referring to Fig. 28, in S120, a client PC 1 requests a list of all print job identifiers held in the queue of a server PC 2. In S121, the server PC 2 returns the requested list. The server PC 2 need not determine whether print job composition is possible and can therefore immediately return the print job identifier list in S121.

The client PC 1 designates a print job identifier designated in advance (e.g., the print job identifier at the top) or designated by the user in the list and acquires a print job attribute from the server PC 2 (S122 and S123).

The client PC 1 determines on the basis of the acquired print job attribute whether print job composition is possible. If print job composition by gang-up is possible, the client PC 1 designates the print job number and submits the print job in S124.

As described above, in the third embodiment, the client side determines whether print job composition is possible and decides whether to submit a print job. In this arrangement, when the position of the print job subjected to print job composition is determined in advance, the server side need not determine the possibility of print job composition more than necessary. Hence, the server apparatus receives, from the client terminal, the target print job, the identifier of the selected print job, and a composite position. The server apparatus composites the target print job with an existing print job specified by the identifier such that the print range of the target print job is arranged at the designated composite position. It is therefore possible to efficiently determine the possibility of print job composition by gang-up.

<Fourth Embodiment> The fourth embodiment of the present invention will be described. Only the difference between the fourth embodiment and the first embodiment will be described. In the first embodiment, the process considers a physical post-process, i.e., cutting for print job composition. For gang-up, when a post-process as image processing such as automatic insertion of a color chart or copy number is also taken into consideration, the gang-up determination can be executed more appropriately.

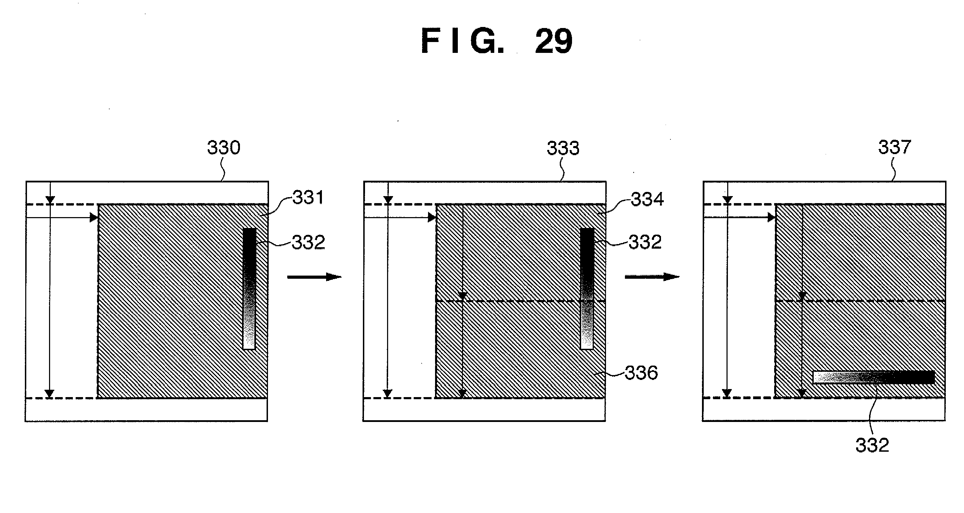

Fig. 29 is a view showing editing in print job composition considering color chart positions according to the fourth embodiment. In a pre-segmentation area 330, no print job is assigned to an unused area 331, although an MFP 3 automatically inserts a color chart 332 in the area. Assume that, in this state, the unused area 331 is segmented into areas 334 and 336 to composite a print job in one of them, as indicated by a pre-segmentation area 333. That is, when the unused area 331 is segmented into the areas 334 and 336, as shown in Fig. 29, the color chart 332 is divided to the two areas.

As indicated by a pre-segmentation area 337, a server PC 2 or MFP 3 moves the color chart 332 to the new unused area generated by segmentation. The detailed process is executed by editing the JDF and editing images in the MFP 3.

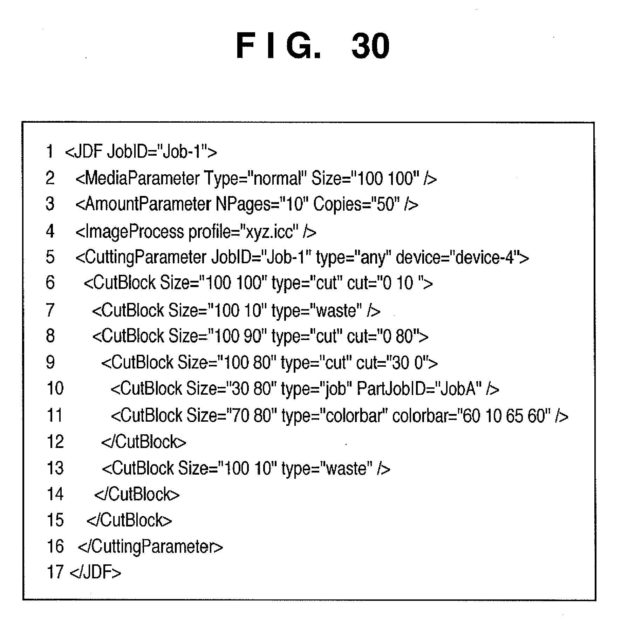

Fig. 30 shows a JDF corresponding to the area 330 in Fig. 29. Referring to Fig. 30, the description of line 11 in which the value of "type" of <CutBlock> is "colorbar" indicates that the area includes a color chart. The value of "colorbar" represents the coordinates of the color chart in the area 331. In the fourth embodiment, the target of the unused node search in step S245 of the flowchart in Fig. 25A also includes a node having <CutBlock> in which the value of "type" is "colorbar".

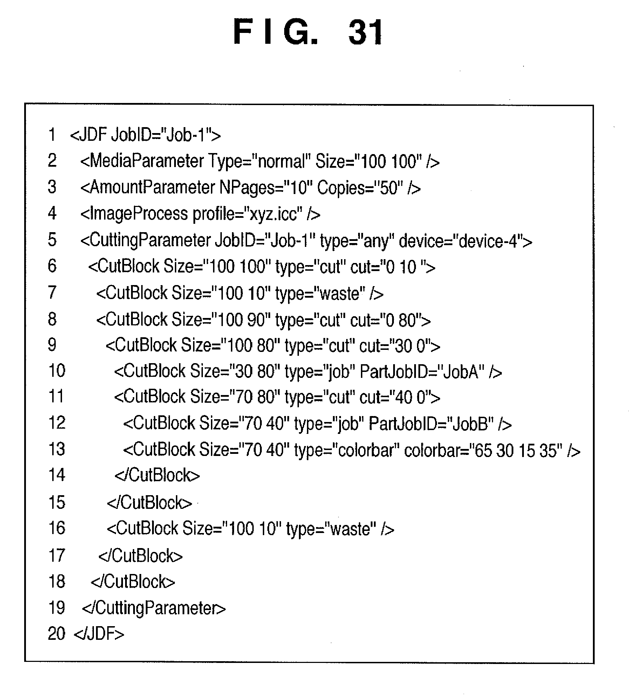

Fig. 31 shows a JDF corresponding to the area 337 in Fig. 29. Referring to Fig. 31, as indicated by line 13, the color chart position is replaced with a position indicated by 338 in accordance with print job composition. That is, an image composition unit 14 prints an image object such as a color chart or copy number and determines whether the print range of the target print job overlaps the image object. If it is determined that the print range overlaps the image object, the image composition unit 14 moves the image object to an area different from the print range of the target print job and composites the target print job with the found print job.

The color chart image is moved simultaneously with additional image composition in step S281 or S284 of the flowchart in Fig. 26. As described above, when the post-process to be taken into consideration in print job composition includes image processing to be executed automatically by the MFP 3, gang-up determination can be done more appropriately.

<Fifth Embodiment> The fifth embodiment of the present invention will be described. Only the difference between the fifth embodiment and the first embodiment will be described. In the first embodiment, only cutting is taken into consideration in area segmentation for print job composition determination. In the fifth embodiment, a combination of a folding process and cutting is also taken into consideration.

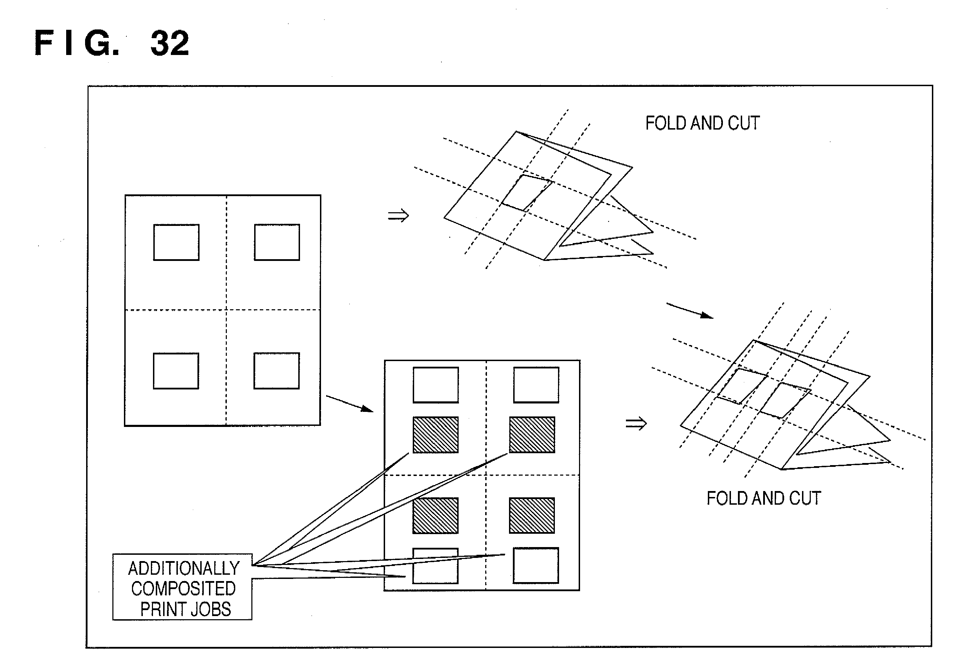

Fig. 32 is a view showing gang-up considering folding. In a folded state as shown in Fig. 32, area segmentation and print job composition determination are performed, as in the first embodiment, thereby executing print job composition considering folding. Considering folding indicates, for example, searching for a description about folding contained in a JDF and additionally compositing a print job in an unused area after cutting included in an area (area segmented by creases) after folding.

<Sixth Embodiment> In the first embodiment, the process has been described assuming that the server PC executes the composition process. In the sixth embodiment, however, a scene in which a client PC executes the composition process will be assumed.

In this case, the client PC has the function of a server PC 2 in Fig. 4. The client PC 1 saves, in, e.g., a job database 13, print jobs waiting for a print process and the print setting information of the print jobs in association with each other.

A determination unit 12 in the client PC searches for a print job compositable with a target print job as a new print target. The search method has been described above with reference to Figs. 25A and 25B, and a description thereof will not be repeated. An example will be described below. The determination unit 12 searches for a print job which has an unused area capable of incorporating the print range of the target print job and is associated with print setting information in which a cutting type that allows cutting in the print range of the target print job.

An image composition unit 14 of the client PC composites the found print job with the target print job. The composition process has been described above with reference to Fig. 26, and a description thereof will not be repeated.

As in this embodiment, when the client PC executes the composition process, an efficient print process can be done even when the client PC is not connected to the server PC, resulting in cost reduction.

As described above, the present invention can be provided not only for cutting but also for a combination of cutting and folding.

The present invention is also applicable to a system including a plurality of devices (e.g., host computer, interface device, reader, and printer) or an apparatus (e.g., copying machine or facsimile apparatus) including a single device. The object of the present invention is achieved even by supplying a recording medium which records software program codes for implementing the functions of the above-described embodiments to the system or apparatus and causing the computer of the system or apparatus to read out and execute the program codes stored in the storage medium. In this case, the program codes read out from the storage medium implement the functions of the above-described embodiments by themselves, and the program codes themselves and the storage medium which stores the program codes constitute the present invention.

The present invention also incorporates a case in which the functions of the above-described embodiments are implemented when an operating system (OS) running on the computer partially or wholly executes actual processing on the basis of the instructions of the program codes. The present invention is also applicable to a case in which the program codes read out from the storage medium are written in the memory of a function expansion card inserted into the computer or a function expansion unit connected to the computer. In this case, the CPU of the function expansion card or function expansion unit partially or wholly executes actual processing on the basis of the instructions of the written program codes, thereby implementing the functions of the above-described embodiments.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
This invention improves the operability in a process of compositing print jobs in a business-oriented printer. A client PC (1) acquires the print job attribute of an existing print job compositable with a print job of interest that the client PC (1) is going to submit to a server PC (2). The client PC (1) displays the preview of the print job on the basis of the acquired print job attribute. The user decides, on the preview image, the layout of the print job of interest after composition and submits the identifier of the composition target print job and the print job of interest to the server PC (2). The server PC (2) composites the two print jobs and updates print settings for cutting.

## Claims

1. A print control apparatus communicating with a client terminal, comprising:
holding means for holding waiting print jobs waiting for a print process;
searching means for searching the print jobs held in said holding means for a second print job compositable with a first print job newly received from the client terminal, on the basis of the print setting information of the waiting print jobs held in said holding means and print setting information of the first print job; and
notification means for notifying the client terminal of information about the second print job found by said searching means.

2. The apparatus according to claim 1, wherein
the print setting information of the waiting print jobs held in said holding means contains at least cut settings including a cutting device type, a cut position, and a use state of each area to be cut, and
said searching means searches the print jobs held in said holding means for a print job which has an unused area capable of incorporating a print range of the first print job and for which a difference between a set value except the cut settings contained in the print setting information of the first print job received from the client terminal and a set value except the cut settings contained in the print setting information of the waiting print jobs held in said holding means falls within a predetermined tolerance.

3. The apparatus according to claim 2, wherein said searching means searches the print jobs held in said holding means for a print job which has an unused area that matches the print range of the first print job.

4. The apparatus according to claim 1, wherein the information about the second print job notified by said notification means is at least one of setting information of the print job and image data of the print job.

5. The apparatus according to claim 1, further comprising:
composition means for receiving, from the client terminal, the first print job, an identifier of the second print job selected from the print jobs of the waiting print jobs held in said holding means, and a composite position, and compositing the first print job with the second print job specified by the identifier so as to arrange the print range of the first print job at the composite position; and
update means for updating cut setting information contained in the print setting information of a composite print job composited by said composition means so as to lay out each print job included in the composite print job in each paper sheet divided by cutting a printed product of the composite print job composited by said composition means,
wherein said holding means holds the print jobs composited by said composition means and the print setting information updated by said update means.

6. The apparatus according to claim 5, wherein said composition means prints an image object except a print job in the unused area, and if the print range of the first print job overlaps the image object, moves the image object to an area different from the print range where the first print job is laid out, and composites the first print job with the second print job.

7. The apparatus according to claim 1, wherein said searching means searches the print jobs held in said holding means for a print job which has an unused area capable of incorporating a print range of the first print job.

8. A print control apparatus for compositing a plurality of print jobs, comprising:
a holding means for holding waiting print jobs waiting for a print process;
a searching means for searching the waiting print jobs held in said holding means for a second print job compositable with a first print job as a new print target on the basis of print setting information set in the first print job and the print setting information of the waiting print jobs held in said holding means; and
composition means for compositing the print job found by said searching means with the first print job.

9. The apparatus according to claim 8, wherein said searching means searches the print jobs held in said holding means for a print job which has an unused area capable of incorporating a print range of the first print job

10. The apparatus according to claim 9, wherein said searching means searches the print jobs held in said holding means for a print job associated with print setting information which designates a cutting device of a cutting type capable of cutting in the print range of the first print job.

11. A print system including a client terminal for generating print data to be printed by a printing apparatus, and a print control apparatus communicating with the client terminal,
the print control apparatus comprising:
holding means for holding waiting print jobs waiting for a print process;
searching means for searching the print jobs held in said holding means for a second print job compositable with a first print job newly received from the client terminal, on the basis of the print setting information of the waiting print jobs held in said holding means and print setting information of the first print job; and
notification means for notifying the client terminal of information about the second print job found by said searching means,
the client terminal comprising:
preview means for displaying a print job based on the information about the print job sent by said notification means;
receiving means for receiving selection of an existing print job from a preview image based on the print job displayed by said preview means; and
sending means for sending, to the print control apparatus, an identifier of the print job whose selection is received by said receiving means, and
the print control apparatus further comprising composition means for compositing the first print job with a print job corresponding to the identifier sent by said sending means.

12. A print control method of compositing a print job received from a client terminal with a held print job in a print control apparatus including holding means which holds waiting print jobs waiting for a print process, the method comprising the steps of:
searching the print jobs held in said holding means for a second print job compositable with a first print job newly received from the client terminal, on the basis of the print setting information of the waiting print jobs held in said holding means and print setting information of the first print job; and
notifying the client terminal of information about the second print job found in said searching step.

13. A print control method of compositing a plurality of print jobs in a print control apparatus including holding means which holds waiting print jobs waiting for a print process, the method comprising the steps of:
searching the waiting print jobs held in said holding means for a second print job compositable with a first print job as a new print target on the basis of print setting information set in the first print job and the print setting information of the waiting print jobs held in said holding means; and
compositing the print job found in said searching step with the first print job.

14. A program for causing a computer to perform a method of compositing a print job received from a client terminal with a held print job, the program being stored in a computer readable medium, said method comprising the steps of:
holding waiting print jobs waiting for a print process;
searching the print jobs held in said holding step for a second print job compositable with a first print job newly received from the client terminal, on the basis of the print setting information of the waiting print jobs held in said holding step and print setting information of the first print job; and
notifying the client terminal of information about the second print job found in said searching step.

15. A program for causing a computer to perform a print control method of compositing a plurality of print jobs, the program being stored in a computer readable medium, the method comprising the steps of:
holding waiting print jobs waiting for a print process;
searching the waiting print jobs held in said holding step for a second print job compositable with a first print job as a new print target on the basis of print setting information set in the first print job and the print setting information of the waiting print jobs held in said holding step; and
compositing the print job found in said searching step with the first print job.
